# EUROPÄISCHE PATENTSCHRIFT

(11) **EP 3 005 651 B1**
(45) Veröffentlichungstag und Bekanntmachung des Hinweises auf die Patenterteilung: **20.02.2019**
(21) Anmeldenummer: 14736300.6
(22) Anmeldetag: 03.06.2014
(51) Int. Cl.: H04L 29/06, H04L 29/12, G06Q 20/12, G06Q 20/32, G06Q 20/42

(54) **VERFAHREN ZUR ADRESSIERUNG, AUTHENTIFIZIERUNG UND SICHEREN DATENSPEICHERUNG IN RECHNERSYSTEMEN**
METHOD FOR ADDRESSING, AUTHENTICATION, AND SECURE DATA STORAGE IN COMPUTER SYSTEMS
PROCÉDÉ D'ADRESSAGE, D'AUTHENTIFICATION ET DE SAUVEGARDE SÉCURISÉE DE DONNÉES DANS DES SYSTÈMES INFORMATIQUES

(30) Priorität: 05.06.2013 DE 102013105781
(43) Veröffentlichungstag der Anmeldung: 13.04.2016
(73) Patentinhaber: Sommer, Ralf, 36391 Sinntal-Oberzell (DE)
(72) Erfinder: Sommer, Ralf, 36391 Sinntal-Oberzell (DE)
(74) Vertreter: Baumann, Rüdiger Walter
(86) Internationale Anmeldenummer: PCT/EP2014/061519
(87) Internationale Veröffentlichungsnummer: WO 2014/195332

(56) Entgegenhaltungen:
- WO-A1-2012/135563
- US-A1- 2003 200 184
- US-A1- 2006 294 387
- US-A1- 2010 197 293
- US-A1- 2010 239 077
- US-A1- 2010 310 061

## Beschreibung

Die Erfindung bezieht sich auf ein Verfahren mit dem die sichere Adressierung und Authentifizierung für den Aufbau von Verbindungen sowie die sichere Speicherung von Daten und die Vermeidung der Herausgabe von Daten an Dritte ermöglicht wird. Des Weiteren erlaubt die Erfindung das sichere Bezahlen über Datenverbindungen. Es betrifft damit insbesondere ein Adressierungs-, Authentifizierungs- und Datenspeicher-Verfahren für "Private Cloud" Netzwerke und ein sicheres Bezahlen über Datenverbindungen.

Nach aktuellem Stand der Technik gibt es heute zwei verbreitete Methoden zur Adressierung von Rechnersystemen im Internet, nämlich den DNS-Service oder die Adressierung von fest zugeordneten IP-Adressen. Dynamische IP-Adressen, wie sie von der Mehrzahl der Internet-Anbieter den Kundengeräten zugewiesen werden, können nur über den Umweg von Internet-Diensten (z.B. DynDNS.org, NolP.com, Selfhost.de, TZODNS.com oder dynamische DNSDienste des Internet-Anbieters) zur Adressierung eines bestimmten Rechnersystems genutzt werden. Unter einem Rechnersystem soll dabei z.B. ein Internet-Router, Smartphone, Server, Personal Computer, Laptop, Notebook, Tablet-PC etc. verstanden werden.

Die vorgenannten Verfahren ermöglichen potentiellen Angreifern aus dem Internet über DNS oder die IP-Adresse die Rechnersysteme anzugreifen. Hierbei kann gegebenenfalls die Kontrolle über die Rechnersysteme erlangt werden oder es können so genannte DOS (Denial of Service) - Angriffe auf diese Rechnersysteme durchgeführt werden. Im Falle von dynamischen DNS-Diensten ist es auch möglich, dass die Zugangsdaten für den dynamischen DNS-Dienst entwendet werden. Dadurch hätte ein Angreifer die Möglichkeit, die dynamische DNS-Adresse auf ein anderes Rechnersystem umzuleiten, um dann die Zugriffe der Anwender auf diese Adresse auszuspionieren.

Bekannt ist zwar die Übertragung der IP-Adresse über eine Telefonverbindung durchzuführen. Hierbei kann jedoch nicht ausgeschlossen werden, dass eine gefälschte Anrufer-ID (Telefonnummer) verwendet wird. Dieser Missbrauch ist jedoch nicht erkennbar, die Übertragung der IP-Adresse somit nicht sicher. Für die Authentifizierung werden heute in der Regel Benutzername und Passwort verwendet. Bei Bankgeschäften werden darüber hinaus noch Chipkarten und Einmalpasswörter, sogenannte TANs oder smsTANs, verwendet. Der Nachteil bei der Authentifizierung mittels Benutzername und Passwort besteht darin, dass der Anwender für unterschiedliche Zielsysteme jeweils eigene Benutzernamen und Passwörter anlegen muss. Oftmals wird dann zur Reduzierung der Anzahl von Passwörtern ein gemeinsames Passwort für unterschiedliche Zielsysteme angelegt.

Hierbei entsteht das Problem, dass durch die Entwendung dieses gemeinsamen Passwortes, ein Angreifer auf mehrere Zielsysteme des Anwenders zugreifen kann, um z.B. Daten zu manipulieren oder auszuspionieren oder um Einkäufe im Namen und auf Rechnung des Anwenders durchzuführen. Darüber hinaus hat der Anwender in der Regel auch keine Möglichkeit zu verifizieren, wie sicher die Zugangsdaten beim jeweiligen Zielsystem gespeichert werden.

Auch Chipkarten und Einmalpasswörter (TAN/smsTAN) für Bankgeschäfte können durch technische Verfahren missbraucht werden. So gibt es schon bekannte Fälle in denen smsTANs abgefangen und missbraucht wurden. Bei drahtlosen Verbindungen wie z.B. NFC, Bluetooth, WLAN usw. besteht die Gefahr darin, dass der Verbindungsaufbau und die drahtlose Übertragung von Daten durch Angreifer abgehört werden. Es gibt daraus resultierend eine Vielzahl von Angriffsmöglichkeiten, um den Zugriff auf die Rechnersysteme zu erlangen oder um die Daten zu missbrauchen.

Nach aktuellem Stand der Technik, werden oftmals Benutzerdaten auf mehreren fremden Rechnersystemen hinterlegt. So ist es in der Regel notwendig, für Einkäufe über das Internet Benutzername, Passwort und die Konto- oder Kreditkartendaten beim jeweiligen Online- Händler zu hinterlegen. Bei sozialen Netzwerken werden in hohem Maße persönliche und private Daten an ein fremdes Rechnersystem übertragen, teilweise sogar unter der Maßgabe, dass diese Daten vom Anbieter des sozialen Netzwerkes verwendet werden dürfen. Immer wieder werden allerdings Fälle bekannt, in denen Benutzerdaten von Hackern entwendet und missbräuchlich verwendet wurden. So wurden im Mai 2011 durch einen Hacker-Angriff auf Datenverarbeitungssysteme der Firma Sony Millionen von Personendaten, unter anderem auch Passwörter und Kreditkartennummern entwendet.

Bei Bezahlvorgängen über das Internet müssen in der Regel Kontodaten oder Kreditkartendaten an den Verkäufer bzw. den Online-Shop übermittelt werden. Diese Daten werden in den meisten Fällen in den Computersystemen beim Verkäufer gespeichert. Auch hier hat der Anwender in der Regel keine Möglichkeit zu verifizieren, wie sicher die Daten in den Computersystemen beim Verkäufer gespeichert werden. Es gibt eine Vielzahl von Fällen, in denen diese Daten entwendet und missbräuchlich verwendet wurden. Dabei wurden die Daten sowohl von Angreifern außerhalb als auch von Angreifern innerhalb dieser Firmen entwendet.

Die vorliegende Erfindung sucht die Nachteile des vorstehend beschriebenen Standes der Technik zu überwinden und ein Verfahren bereitzustellen, das besonders einfach und kostengünstig durchzuführen ist und mit dem eine sichere Adressierung und Authentifizierung für Verbindungen zwischen unterschiedlichen Rechnersystemen wie z.B. Internet-Routern, Smartphones, Servern, Personal Computer usw. sowie eine sichere Speicherung von persönlichen Daten ermöglicht, so dass eine Herausgabe von Daten an Dritte vermieden wird. Des Weiteren möchte die Erfindung eine sichere Bezahlung bei Online-Einkäufen im Internet oder bei Einkäufen in Geschäften ermöglichen.

Diese Aufgabe wird dadurch gelöst, dass Rechnersysteme neben einer Netzwerk-Schnittstelle, also z.B. einer Ethernet-, NFC-, Bluetooth-, WLAN, LAN-Schnittstelle auch über eine Telefonieschnittstelle mit zugehöriger Rufnummer kommunizieren.Das Verfahren gemäß der Erfindung dient zur Adressierung, Authentifizierung und sicheren Datenspeicherung in Rechnersystemen mit wenigstens einer Netzwerkschnittstelle und wenigstens einer Telefonieschnittstelle sowie wenigstens einem Speicherplatz für Verwaltungsinformationen, insbesondere für zugelassene Rufnummern und Teilnehmer-PINs derart, dass die Rechnersysteme mit einem eine Steuerungslogik abbildenden Programm zur Steuerung des Zusammenwirkens der vorgenannten Schnittstellen programmiert sind. Das Verfahren umfasst dabei wenigstens folgende Schritte:
a) Übertragen der Verbindungsinformationen für die Netzwerkschnittstelle eines ersten Rechnersystems über die Telefonieschnittstelle an ein zweites Rechnersystem;
b) Automatisches Überprüfen einer Rufnummer des ersten Rechnersystems mit den in dem wenigstens einen Speicherplatz im zweiten Rechnersystem hinterlegten Rufnummern und bei positiver Prüfung automatisches übertragen der Verbindungsinformationen für die Netzwerkschnittstelle des zweiten Rechnersystems über die Telefonieschnittstelle an das erste Rechnersystem sowie Aktivierung der Netzwerkschnittstelle des zweiten Rechnersystems, um Verbindungen auf Basis der Verbindungsinformationen des ersten Rechnersystems anzunehmen;
c) Überprüfen der Rufnummer des zweiten Rechnersystems mit den in dem wenigstens einen Speicherplatz im ersten Rechnersystem hinterlegten Rufnummern und bei positiver Prüfung Aktivierung der Netzwerkschnittstelle des ersten Rechnersystems, um eine Verbindung auf Basis der Verbindungsinformationen des zweiten Rechnersystems aufzubauen; wobei
d) die Netzwerkschnittstelle des zweiten Rechnersystems derart konfiguriert ist, dass nur Verbindungen mit den Verbindungsinformationen des ersten Rechnersystems zugelassen sind, und
e) die Netzwerkschnittstelle des ersten Rechnersystems derart konfiguriert ist, dass nur Verbindungen mit den Verbindungsinformationen des zweiten Rechnersystems zugelassen werden, und
f) die Netzwerkschnittstellen des ersten und zweiten Rechnersystems nur für einen kurzen vorgegebenen Zeitraum Verbindungsversuche mit den jeweiligen Verbindungsinformationen zulassen und nach dem Verbindungsaufbau oder nach Ablauf des vorgegebenen Zeitraums ohne Verbindungsaufbau nicht für andere Rechnersysteme erkennbar oder erreichbar sind.

Durch die klar definierte Zuordnung und gegenseitige Authentifizierung über hinterlegte Rufnummern bzw. Anwenderinformationen kann Missbrauch, beispielsweise unter Verwendung gefälschter oder in sonstiger Weise missbräuchlich beschaffter Rufnummern und/oder IP-Adressen nicht stattfinden.

Das Verfahren kann auch in Systemen mit drei Rechnersystemen angewendet werden. Sind in einer bevorzugten Variante des Verfahrens zwei zur Kommunikation vorgesehene Rechnersysteme, bereits mit einem dritten Rechnersystem verbunden und soll über die Steuerungslogik in dem dritten Rechnersystem eine direkte Verbindung über die Netzwerkschnittstelle aufgebaut werden, umfasst das Verfahren günstiger Weise folgende weiteren Schritte:
g) Übertragen der Verbindungsinformationen für die Telefonieschnittstelle und Netzwerkschnittstelle des ersten Rechnersystems mit einer Systemnachricht über die bestehende Verbindung mit dem einen dritten Rechnersystem an das zweite Rechnersystem;
h) Überprüfen einer Rufnummer des ersten Rechnersystems mit im Speicherplatz des zweiten Rechnersystem hinterlegten Rufnummern und bei positiver Prüfung übertragen der Verbindungsinformationen für die Telefonieschnittstelle und Netzwerkschnittstelle des zweiten Rechnersystems über die bestehende Verbindung mit dem dritten Rechnersystem an das erste Rechnersystem und Aktivierung der Netzwerkschnittstelle des zweiten Rechnersystems, um Verbindungen auf Basis der Verbindungsinformationen des ersten Rechnersystems anzunehmen, und
i) Überprüfen der Rufnummer des zweiten Rechnersystems mit den im Speicherplatz im ersten Rechnersystem hinterlegten Rufnummern und bei positiver Prüfung Aktivierung der Netzwerkschnittstelle des ersten Rechnersystems, um Verbindungen auf Basis der Verbindungsinformationen des zweiten Rechnersystems aufzubauen;
   wobei
j) die Netzwerkschnittstelle des zweiten Rechnersystems nur Verbindungen mit den Verbindungsinformationen des ersten Rechnersystems zulässt;
k) die Netzwerkschnittstelle des ersten Rechnersystems nur Verbindungen mit den Verbindungsinformationen des zweiten Rechnersystems zulässt, und
I) die Netzwerkschnittstellen des ersten und zweiten Rechnersystems nur für einen kurzen vorgegebenen Zeitraum Verbindungsversuche mit den jeweiligen Verbindungsinformationen zulassen und nach dem Verbindungsaufbau oder nach Ablauf des vorgegebenen Zeitraums ohne Verbindungsaufbau nicht für andere Rechnersysteme erkennbar oder erreichbar sind.

Vorteilhaft weitergebildet wird das Verfahren dadurch, dass im Schritt b) und/oder h) die Netzwerkschnittstelle des zweiten und/oder dritten Rechnersystems aktiviert wird, um Verbindungen auf Basis der Verbindungsinformationen des ersten Rechnersystems aufzubauen und dass im Schritt c) und/oder i) die Netzwerkschnittstelle des ersten Rechnersystems aktiviert wird, um Verbindungen auf Basis der Verbindungsinformationen des zweiten und/oder dritten Rechnersystems anzunehmen.

Eine als günstig angesehene Variante des Verfahrens sieht vor, dass das zweite und/oder dritte Rechnersystem nach Verbindungsaufbau eine Identifizierung vom ersten Rechnersystem anfordert, mit den im Speicherplatz des zweiten und/oder dritten Rechnersystems hinterlegten Identifizierungskennzeichen vergleicht, und bei positiver Prüfung die Verbindung aktiviert bleibt und bei negativer Prüfung die Verbindung geschlossen wird und insbesondere eine Alarmbenachrichtigung ausgegeben wird.

Weitergebildet wir das Verfahren dadurch, dass nach einer konfigurierbaren Anzahl, insbesondere nach zwischen 1 und 15, bevorzugt zwischen 2 und 12, insbesondere bevorzugt zwischen 3 und 10 negativen Identifizierungsversuchen die Rufnummer des ersten Rechnersystems im Speicherplatz des zweiten und/oder dritten Rechnersystems durch die Steuerungslogik als gesperrt markiert wird und keine Verbindungsinformationen für das erste Rechnersystem mit dieser Rufnummer mehr angenommen werden.

Erfindungsgemäß ist vorgesehen, dass das Identifizierungskennzeichen ein Text, ein biometrisches Kennzeichen, ein elektronischer Schlüssel oder ein mechanischer Schlüssel, dessen Schlüsselinformationen durch ein Lesegerät an dem ersten Rechnersystem eingelesen werden, ist.

Eine bevorzugte Ausführungsform des Verfahrens sieht vor, dass das erste Rechnersystem mit den Verbindungsinformationen ein Sicherheits-Token an das zweite und/oder dritte Rechnersystem mitliefert, das beim Verbindungsaufbau über die Netzwerkschnittstelle übergeben wird und durch die Steuerungslogik rückmeldend im ersten Rechnersystem überprüft wird und bei positiver Prüfung die Verbindung aktiviert bleibt und bei negativer Prüfung die Verbindung geschlossen wird und eine Alarmbenachrichtigung ausgegeben wird.

Als günstig wird angesehen, wenn nach einer vorgegebenen Anzahl von negativen Verbindungsversuchen die Rufnummer des zweiten und/oder dritten Rechnersystems im Speicherplatz des ersten Rechnersystems durch die Steuerungslogik als gesperrt markiert wird und keine Verbindungsversuche für das zweite und/oder dritte Rechnersystem mit dieser Rufnummer mehr unternommen werden.

Als vorteilhaft erweist sich, wenn ein erstes und ein zweites Rechnersystem, die jeweils bereits mit einem dritten Rechnersystem verbunden sind und eine direkte Verbindung aufgebaut haben, sich nur über das gemeinsame dritte Rechnersystem gegenseitig authentifizieren und das dabei Verfahren folgende weiteren Schritte umfasst:
m) das erste Rechnersystem fordert vom dritten Rechnersystem ein SicherheitsToken über die Verbindung an und sendet dieses an das zweite Rechnersystem über die direkte Verbindung weiter;
n) das zweite Rechnersystem leitet das Sicherheits-Token an das dritte Rechnersystem über die Verbindung weiter;
o) das eine dritte Rechnersystem vergleicht die beiden Sicherheits-Token und sendet jeweils eine Systemnachricht mit dem Ergebnis des Vergleiches an erstes und zweites Rechnersysteme, und
p) die Steuerungslogik jeweils des ersten und des zweiten Rechnersystems überprüft die Systemnachricht mit dem Ergebnis des Vergleiches und lässt bei positiver Prüfung die Verbindung offen und schließt bei negativer Prüfung die direkte Verbindung und gibt eine Alarmmeldung aus.

Eine Ausführungsform des zuvor ausgeführten Verfahrens sieht vor, dass jeweils ein erstes und ein zweites Rechnersystem dazu vorgesehen sind, einen Bezahlvorgang eines Käufers über ein erstes Rechnersystem und eines Verkäufers über ein zweites Rechnersystem durchzuführen. Der Bezahlvorgang kann dabei beispielsweise auch über ein drittes Rechnersystem beispielsweise eine Bezahlservices durchgeführt werden. In dieser Variante umfasst das Verfahren vorteilhaft die weiteren Schritte, wobei
q) die Steuerungslogik im Rechnersystem des Verkäufers ein Sicherheits-Token erzeugt, und der Käufer bzw. das Rechnersystem des Käufers über die direkte Verbindung von dem Verkäufer bzw. dem Rechnersystem des Verkäufers das Sicherheits-Token, bevorzugt zusammen mit einer Zahlungsinformation, erhält;
r) der Verkäufer bzw. das Rechnersystem des Verkäufers die Zahlungsinformation über die Verbindung zusammen mit dem Sicherheits-Token an einen Bezahl- Service bzw. ein Rechnersystem des Bezahl-Services weiterleitet;
s) der Käufer bzw. das Rechnersystem des Käufers, die Zahlungsinformationen zusammen mit dem Sicherheits-Token über die Verbindung an einen Bezahl-Service bzw. das Rechnersystem des Bezahl-Services weiterleitet;
t) der Käufer bzw. das Rechnersystem des Käufers den Zahlungsvorgang über die Verbindung beim Bezahl-Service bzw. das Rechnersystem des Bezahl-Services mit einer PIN o. dgl. autorisiert, und
u) eine Steuerungslogik im Bezahl-Service bzw. dem Rechnersystem des Bezahl-Services das Sicherheits-Token vom Verkäufer bzw. dem Rechnersystem des Verkäufers und vom Käufer bzw. dem Rechnersystem des Käufers vergleicht und die PIN des Käufers bzw. des Rechnersystems des Käufers validiert und bei positiver Prüfung den Zahlungsvorgang abschließt und eine positive Systemnachricht an den Verkäufer bzw. das Rechnersystem des Verkäufers und den Käufer bzw. das Rechnersystem des Käufers zurückgibt. Bei negativer Prüfung hingegen wird der Zahlungsvorgang abgebrochen und eine negative Systemnachricht an den Verkäufer bzw. das Rechnersystem des Verkäufers und den Käufer bzw. das Rechnersystem des Käufers zurückgegeben.

Das wie zuvor ausgeführte Verfahren wird dadurch weitergebildet, dass für den Bezahlvorgang zwischen Verkäufer bzw. Rechnersystem des Verkäufers und Käufer bzw. Rechnersystem des Käufers in einem Geschäft o. dgl. die Verbindung über NFC, Bluetooth, Wireless LAN oder drahtgebundenes LAN, aufgebaut wird.

Dabei erweist es sich als vorteilhaft, wenn für den Bezahlvorgang die Zahlungsinformationen zwischen Verkäufer bzw. Rechnersystem des Verkäufers und Käufer bzw. Rechnersystem des Käufers in einem Geschäft oder einem Online-Shop anstatt über eine direkte Verbindung über ein optisches Signal (z.B. Q/R-Code, Barcode, Zeichenfolgen, ...), ein akustisches Signal (z.B. Modem-Töne, Sprache, ...) oder durch manuelle Eingabe zwischen Verkäufer bzw. Rechnersystem des Verkäufers und Käufer bzw. Rechnersystem des Käufers übermittelt werden. Beim Online-Einkauf kann hierbei auch ein zweites Gerät (1a2 - z.B. Smartphone) zur Aufnahme und Übermittlung der Zahlungsinformationen von einem ersten Gerät (1a1 - z.B. PC oder Notebook) genutzt werden. Das erste Gerät (z.B. PC oder Notebook) übernimmt in diesem Kontext die Rolle eines Terminals des Verkäufers bzw. des Rechnersystem des Verkäufers.

Das Verfahren sieht in einer vorteilhaften Weiterbildung vor, dass die Steuerlogik die Daten für den Zahlungsvorgang zwischen Verkäufer bzw. Rechnersystem des Verkäufers und Bezahl-Service bzw. das Rechnersystem des Bezahl-Services bzw. Käufer bzw. Rechnersystem des Käufers und Bezahl-Service bzw. Rechnersystem des Bezahl-Services auch über beispielsweise bestehende Netzwerkverbindungen übertragen kann, die nicht wie zuvor ausgeführt hergestellt wurden.

Günstiger Weise wird für die Verschlüsselung, Identifikation per PIN, Sicherheits-Token und Autorisierung ein Text, ein biometrisches Kennzeichen, ein elektronischer Schlüssel oder ein mechanischer Schlüssel, dessen Schlüsselinformationen durch ein Lesegerät in den Rechnersystemen eingelesen werden, genutzt.

Vorteilhaft ist wenn für geringe Datenmengen, insbesondere für einen Bezahlvorgang, die Steuerlogik wenigstens einen Teil der in den vorhergehenden Schritten erfassten Daten über die Telefonieschnittstelle überträgt.

Als günstig wird auch angesehen, wenn die Steuerungslogik bei Aktivierung eines vorgegebenen Signals Daten, insbesondere Emails, SMS und FAX an Rechnersysteme ohne Zuhilfenahme anderer Internetdienste wie DNS und DynDNS weiterleitet.

Eine Ausführungsform des Verfahrens sieht vor, dass die Steuerungslogik eine automatische Prüfung durchführt, ob die angezeigte Rufnummer mit dem tatsächlichen Teilnehmer-Anschluss übereinstimmt.

Eine Ausführungsform des Verfahrens sieht vor dass Verbindungsanfragen von einem ersten Rechnersystem durch die Steuerungslogik in einem zweiten und/oder dritten Rechnersystem an unterschiedliche zweite und/oder dritte Rechnersysteme nach einem vorgegebenen Kriterium, insbesondere einer Anzahl von Verbindungen und/oder einer Auslastung und/oder einer Verfügbarkeit der zweiten und/oder dritten Rechnersysteme und/oder einer Rufnummer und/oder eines geografischen Aufenthaltsortes verteilt werden.

Eine Ausführungsform des Verfahrens sieht vor, dass ein Rechnersystem in einer Server-Rolle im Netzwerk Verbindungsanfragen oder Anfragen zur Namensauflösung (z.B. DNS-Anfragen, ...) von weiteren Rechnersystemen im Netzwerk durch die Steuerungslogik verarbeitet und die Steuerungslogik des ersten Rechnersystems den Austausch der Verbindungsinformationen mit einem zweiten und/oder dritten Rechnersystem wie oben ausgeführt durchführt und anschließend die Verbindung herstellt oder die Verbindungsparameter (z.B. IP-Adresse, Port-Nummer, ...) an die anfragenden Rechnersysteme zurückgibt.

Eine Ausführungsform des Verfahrens sieht vor, dass die Steuerungslogik eines Rechnersystems die nach den vorhergehenden Ansprüchen ermittelten Verbindungsparameter auch wenigstens an ein weiteres Server-System (z.B. Firewall, ...) weiterleitet und dieses dann die Verbindungen vom Rechnersystem oder von Rechnersystemen aus dem Netzwerk mit diesen Verbindungsparametern zulässt.

Eine Ausführungsform des Verfahrens sieht vor, dass die Steuerungslogik der zweiten und/oder dritten Rechnersysteme den ersten Rechnersystemen in Abhängigkeit der Verbindungsinformationen automatisch Informationen und Steuerungsdaten weiterleitet oder zur Verfügung stellt.

Eine Ausführungsform des Verfahrens sieht vor, dass die Rufnummer des zweiten und/oder dritten Rechnersystems für einen anderen oder bestehenden Telefoniedienst, insbesondere einen FAX-Dienst und/oder einen Anrufbeantworter genutzt wird, und die Steuerungslogik des zweiten und/oder dritten Rechnersystems die Rufnummer des ersten Rechnersystems mit den im Speicherplatz des zweiten und/oder dritten Rechnersystems hinterlegten Rufnummern vergleicht und bei Übereinstimmung nicht den Telefoniedienst aktiviert, sondern die Verbindungsdaten für das zweite und/oder dritte Rechnersystem an das erste Rechnersystem übermittelt.

In einer bevorzugten Weiterbildung des Verfahrens ist vorgesehen, dass das als Telefonieschnittstelle bezeichnete Element alternativ auch durch optische Signale (z.B. Q/R-Code, Barcode, Zeichenfolgen), akustische Signale (z.B. Modem-Töne, Sprache), durch manuelle Eingaben oder durch zuvor auf anderem Wege hergestellte sichere Verbindungen (z.B. NFC, Bluetooth, WLAN, USB, ...) mit gleicher Wirkung zur Verfügung gestellt wird. Für geografisch nahe zusammenliegende Rechnersysteme 1, 1a, 1a1, 1a2, 1b, kann die Verbindungsinformationen für die Netzwerkschnittstelle 11 dann über diese optischen Signale (z.B. Q/R-Code, Barcode, Zeichenfolgen), akustischen Signale (z.B. Modem-Töne, Sprache, oder dergleichen), manuellen Eingaben oder durch die zuvor auf anderem Wege hergestellte sichere Verbindungen (z.B. NFC, Bluetooth, WLAN, USB) zwischen den Rechnersystemen 1, 1a, 1a1, 1a2, 1b übermittelt werden. Eine Übermittlung kann dann bevorzugt auch bidirektional erfolgen.

Erfindungsgemäß ist auch die Verwendung des wie zuvor ausgeführten Verfahrens mit Protokollen anderer verbindungsorientierter Schnittstellen, insbesondere mit NFC-, Bluetooth- und WLAN-Protokollen vorgesehen.

Durch eine Steuerungslogik für das Zusammenwirken von Telefonie- und Netzwerkschnittstelle stellt die Erfindung eine neue und sichere Variante zum Aufbau von Verbindungen zwischen Rechnersystemen zur Verfügung, insbesondere auch im Bereich der drahtlosen Kommunikation wie NFC, Bluetooth, WLAN, usw. Viele der vorstehend genannten Rechnersysteme besitzen heute bereits beide Verbindungstypen, d.h. Telefonie- und Netzwerkschnittstelle, oder können durch Zusatzmodule in Hardware und/oder Software damit ausgestattet werden.

Ein wesentlicher Punkt der erfindungsgemäßen Lösung besteht darin, dass für die Adressierung und Authentifizierung ein Teil der Verbindungsinformationen über das Telefonie-System übertragen wird. Verbindungsinformationen können z.B. in TCP/IPAdressen, TCP/IP-Ports, Benutzernamen, Standorten, usw. bestehen. Hierfür nutzt die Erfindung die jeweiligen Telefonie-Protokolle und -Dienste wie z.B. bei ISDN den D-Kanal, eine Ton-/Modem-Verbindung, SMS, und/oder FAX-Dienste. Die vorstehend genannten Rechnersysteme nutzen diese Verbindungsinformationen, um zu prüfen, ob die Daten mit einer zulässigen Rufnummer übermittelt wurden. Anschließend kann nach positiver Prüfung damit eine Datenverbindung hergestellt werden.

Für Rechnersysteme, die nur über eine dynamische IP-Adresse verfügen oder für drahtlose Systeme, bietet die Erfindung hiermit eine neue Möglichkeit, diese Rechnersysteme ohne Zuhilfenahme eines Zusatzdienstes wie z.B. DynDNS bzw. angreifbare drahtlose Verbindungsaufbau-Verfahren zu erreichen. Für Rechnersysteme ohne besondere Sicherheitsanforderungen wie z.B. Informationsseiten eines Unternehmens kann dieses Verfahren auch ohne weitere Authentifizierung genutzt werden, um Zugriffe auf diese Rechnersysteme zu ermöglichen.

Ein wesentlicher weiterer Punkt der erfindungsgemäßen Lösung besteht auch darin, dass die Listener der Netzwerkschnittstelle nur für einen kurzen Zeitraum (wenige Sekunden) aktiviert werden und dabei nur auf Verbindungsdaten reagieren, die zuvor per Telefonieschnittstelle übertragen wurden. Unter einem Listener soll dabei eine Schnittstelle bzw. Dienst verstanden werden, zu dem ein Rechnersystem eine Verbindung aufbauen kann. Nach dem Verbindungsaufbau oder nach Ablauf eines vorgegebenen Zeitraums ("Timeout") ohne Verbindungsaufbau sind die Rechnersysteme nicht für andere Rechnersysteme erkennbar oder erreichbar.

Eine Überprüfung der Rufnummern des jeweiligen Rechnersystems durch die Steuerungslogik bietet eine zusätzliche Vorauswahl von erlaubten Zugriffen. Durch die gegenseitige Anwahl der Rufnummern durch die Rechnersysteme kann zudem verhindert werden, dass eine übermittelte Rufnummer, die nicht mit einem Teilnehmer übereinstimmt zu einem Verbindungsaufbau führt. Dies verhindert weitestgehend unbefugte Zugriffsversuche von Angreifern über die Telefonieschnittstelle oder die Netzwerkschnittstelle .

Des Weiteren kann bei größeren Installationen über die Steuerungslogik eine Verteilung von Rechnersystemen auf unterschiedliche zweite Rechnersysteme nach einem vorgegebenen Kriterium wie zum Beispiel Anzahl von Verbindungen, Auslastung, Verfügbarkeit der zweiten Rechnersysteme, Rufnummer und/oder eines geografischem Aufenthaltsortes erfolgen.

Durch die Auswertung der geografischen bzw. Standort bezogenen Daten aus den Verbindungsdaten kann die Steuerungslogik eines Rechnersystems eine optimale Verbindung wie z.B. Bluetooth, WLAN, Internet etc. auswählen bzw. dem Benutzer eine Auswahl der möglichen Verbindungen erlauben.

Für den Verbindungsaufbau stellt die Erfindung wenigstens drei Verfahren zur Verfügung, die im Folgenden unter Bezugnahme auf die beigefügten Figuren näher erläutert werden sollen. Gleiche oder gleichwirkende Teile sind dabei mit gleichen Bezugsziffern versehen.

Es zeigen:
Fig. 1 eine schematische Darstellung einer erfindungsgemäßen Client-Server-Verbindung mit einem Server und einem Client;
Fig. 2 eine schematische Darstellung einer erfindungsgemäßen Client-Server-Verbindung mit einem Server und zwei Clients, und
Fig. 3 eine schematische Darstellung einer erfindungsgemäßen Client-Server-Verbindung mit zwei Clients zur Erläuterung eines Kaufvorgangs.

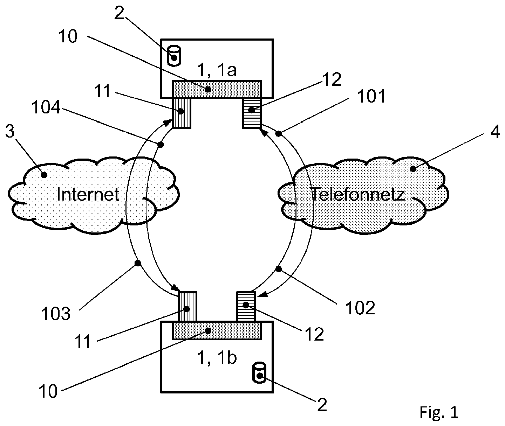

Figur 1 zeigt eine schematische Darstellung einer erfindungsgemäßen Client-Server-Verbindung mit einem im Sinne der Erfindung zuvor auch als zweites und/oder drittes Rechnersystem bezeichneten Server 1, 1b und einem im Sinne der Erfindung zuvor auch als erstes Rechnersystem bezeichneten Client 1, 1a. Die Serververbindung wird dabei über eine Steuerungslogik 10 aufgebaut, bei welcher das erste Rechnersystem 1a dem zweiten Rechnersystem 1b über eine Telefonieschnittstelle 12 und eine erste Verbindung 101 über das Telefonnetz 4 zunächst die Verbindungsinformationen vom ersten Rechnersystem 1a überträgt. Das zweite Rechnersystem 1b überträgt dem ersten Rechnersystem 1a nach positiver Prüfung die Verbindungsinformationen vom zweiten Rechnersystem 1b über eine zweite Verbindung 102. Das erste Rechnersystem 1a aktiviert nach positiver Prüfung eine Netzwerkschnittstelle 11. Die Netzwerkschnittstelle 11 des ersten Rechnersystems 1a bleibt nur bis zur dritten Verbindung 103 vom zweiten Rechnersystem 1b bzw. Ablauf eines Timeouts aktiv. Das zweite Rechnersystem 1b baut die dritte Verbindung 103 zur Netzwerkschnittstelle 11 des ersten Rechnersystems 1a auf. Bei Anforderung vom zweiten Rechnersystem 1b übermittelt das erste Rechnersystem 1a eine PIN.

Die Client-Verbindung geschieht nun dergestalt, dass das erste Rechnersystem 1a dem zweiten Rechnersystem 1b über eine erste Verbindung 101 die Verbindungsinformationen vom ersten Rechnersystem 1a überträgt. Das zweite Rechnersystem 1b überträgt dem ersten Rechnersystem 1a nach positiver Prüfung die Verbindungsinformationen vom zweiten Rechnersystem 1b über eine zweite Verbindung 102. Das zweite Rechnersystem 1b aktiviert die Netzwerkschnittstelle 11, welche nur bis zur vierte Verbindung 104 des ersten Rechnersystems 1a bzw. Ablauf eines Timeouts aktiv bleibt. Das erste Rechnersystem 1a baut nach positiver Prüfung die vierte Verbindung 104 zur Netzwerkschnittstelle 11 des zweiten Rechnersystems 1b auf. Bei Anforderung des zweiten Rechnersystem 1b übermittelt das erste Rechnersystem 1a eine PIN.

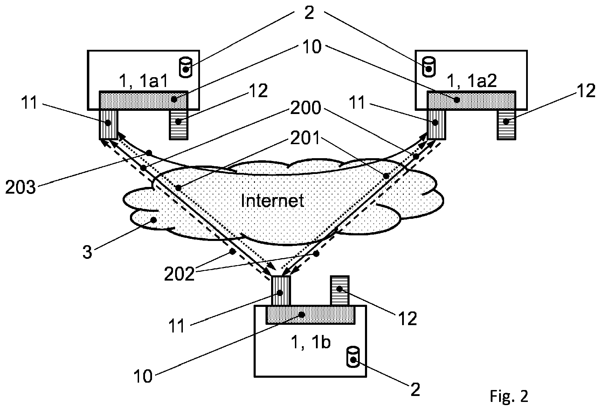

Figur 2 zeigt eine schematische Darstellung einer erfindungsgemäßen Client-Server-Verbindung mit einem als Server 1, 1b bezeichneten dritten Rechnersystem und zwei als Clients 1, 1a1, 1, 1a2 bezeichneten Rechnersystemen, genauer erstem 1, 1a1, und zweitem Rechnersystem 1, 1a2. Ein erstes Rechnersystem 1, 1a1 möchte mit einem zweiten Rechnersystem 1, 1a2 eine Verbindung 203 aufbauen. Beide Rechnersysteme 1, 1a1, 1, 1a2 sind bereits mit einem gemeinsamen dritten Rechnersystem 1, 1b über eine bestehende Verbindung 200 verbunden. Von diesem gemeinsamen dritten Rechnersystem 1, 1b haben die beiden Rechnersysteme 1, 1a1, 1, 1a2 bereits wenigstens einen Teil der jeweiligen Verbindungsinformationen über eine Systemnachricht vom dritten Rechnersystem 1, 1b erhalten.

Das erste Rechnersystem 1, 1a1 sendet über das dritte Rechnersystem 1, 1b eine Systemnachricht mit den vollständigen Verbindungsinformationen von erstem Rechnersystem 1, 1a1 zum zweiten Rechnersystem 1, 1a2. Das zweite Rechnersystem 1, 1a2 sendet nach positiver Prüfung über das dritte Rechnersystem 1, 1b die vollständigen Verbindungsinformationen (mit optionalem Sicherheits-Token) von zweitem Rechnersystem 1, 1a2 zurück und wartet auf die direkte Verbindung des ersten Rechnersystems 1, 1a1 über die Netzwerkschnittstelle 11. Das zweite Rechnersystem 1, 1a2 aktiviert schließlich die Netzwerkschnittstelle 11.

Die Netzwerkschnittstelle 11 des zweiten Rechnersystems 1, 1a2 bleibt nur bis zur Verbindung 203 des ersten Rechnersystems 1, 1a1 bzw. Ablauf eines Timeouts aktiv. Das erste Rechnersystem 1, 1a1 baut nach positiver Prüfung die direkte Verbindung 203 zum zweiten Rechnersystem 1, 1a2 auf, wobei das erste Rechnersystem 1, 1a1 ggf. das optionale Sicherheits-Token mitliefert, das vom zweiten Rechnersystem 1, 1a2 überprüft wird. Optional kann für das erste Rechnersystem 1, 1a1 eine PIN-Eingabe durch das zweite Rechnersystem 1, 1a2 angefordert werden.

Vorteile dieses Verfahrens bestehen unter anderem darin, dass eine Einschränkung der Zugriffe auf zuvor registrierte Rufnummern möglich ist. Zudem ist die Netzwerkschnittstelle 11 nur für kurze Zeit aktiv und reagiert nur auf die über die Telefonieschnittstelle 12 übermittelten Verbindungsdaten wie z.B. IP-Adressen, Ports, Interfacedaten für NFC, Bluetooth, WLAN, usw.. Es sind damit keine unbefugten Zugriffe möglich. Insbesondere sind keine DOS-Angriffe möglich, da die Netzwerkschnittstelle 11 nur für kurze Zeit aktiv ist und nur auf zuvor übermittelte Verbindungsdaten wie z.B. IP-Adressen, Ports, Interfacedaten für NFC, Bluetooth, WLAN, usw. reagiert. Darüber hinaus haben sowohl erstes und zweites Rechnersysteme 1a, 1a1, 1a2 als auch das dritte Rechnersystem 1, 1b keine ständig aktiven Netzwerkschnittstellen 11 und sind somit für Angriffe aus dem Internet nicht erkennbar oder erreichbar. Bei Personal Private Network Cloud-Verbindungen, bei denen nur Geräte einer Person miteinander vernetzt werden, besteht für Dritte keine Zugriffsmöglichkeit auf die Daten.

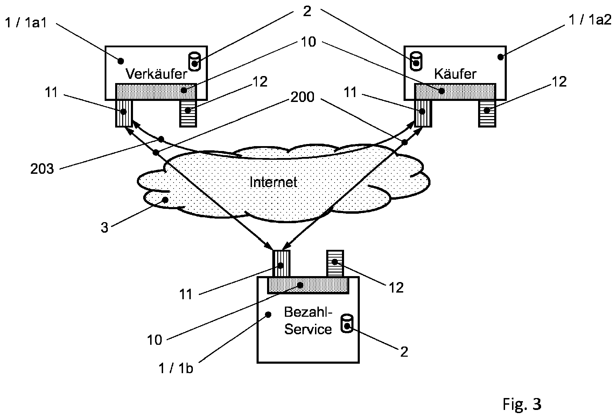

Figur 3 zeigt eine schematische Darstellung einer erfindungsgemäßen Client-Server-Verbindung mit zwei Clients zur Erläuterung eines Kaufvorgangs. Für Bezahlvorgänge nutzt die Erfindung eine Kombination der vorgenannten Verfahren für den Verbindungsaufbau. Als drittes Rechnersystem 1, 1b aus den vorgenannten Verfahren fungiert hierbei ein als Bezahlservice 1b bezeichnetes Rechnersystem, bei dem sich sowohl ein als Verkäufer 1a1 bezeichnetes erstes Rechnersystem als auch ein als Käufer 1a2 bezeichnetes zweites Rechnersystem zuvor registrieren müssen. Beim Bezahlvorgang wird durch die Steuerungslogik 10 ein Kommunikationsring Verkäufer 1a1 <=> Käufer 1a2 <=> Bezahlservice 1b <=> Verkäufer 1a1" aufgebaut.

Der Zahlungsablauf im Internet 3 verläuft dabei beispielsweise derart, dass der Käufer 1a2 einen Kauf in einem Online-Shop eines Verkäufers 1a1 tätigt, bei dem ein Warenkorb angelegt wird. Für den Zahlungsvorgang authentifiziert sich der Käufer 1a2 per Telefon bei dem Bezahlservice 1b und der Verkäufer 1a1 übermittelt einen Sicherheits-Token und die Zahlungsinformationen für den Bezahlvorgang an den Käufer 1a2 über eine Internetverbindung. Der Käufer 1a2 autorisiert in der Folge den Bezahlvorgang mit einem PIN beim Bezahlservice 1b und der Verkäufer 1a1 authentifiziert sich beim Bezahlservice 1b. Der Verkäufer 1a1 übermittelt das Sicherheits-Token und die Zahlungsinformationen auch an den Bezahlservice 1b. Der Bezahlservice 1b validiert schließlich das Sicherheits-Token von Käufer 1a2 und Verkäufer 1a1 und die PIN vom Käufer 1a2. Bei positiver Prüfung erfolgt Rückmeldung vom Bezahlservice 1b zur Zahlungsfreigabe an Käufer 1a2 und Verkäufer 1a1. Der Bezahlvorgang ist abgeschlossen.

Der Zahlungsablauf in einem Vor-Ort-Geschäft verläuft derart, dass der Käufer 1a2 einen Einkauf tätigt, und sich für den Bezahlvorgang an der Kasse per (Mobil)-Telefon beim Bezahlservice 1b authentifiziert. Der Verkäufer 1a1 übermittelt einen Sicherheits-Token für den Bezahlvorgang und die Zahlungsinformationen an den Käufer 1a2, z. B. mit NFC, Bluetooth oder Wireless LAN, ggf. auch über drahtgebundenes LAN. Der Käufer 1a2 autorisiert den Bezahlvorgang mit einem PIN beim Bezahlservice 1b und der Verkäufer 1a1 authentifiziert sich beim Bezahlservicelb. Der Verkäufer 1a1 übermittelt das Sicherheits-Token und die Zahlungsinformationen auch an den Bezahlservice 1b, welcher wiederum das Sicherheits-Token von Käufer/Verkäufer 1a1, 1a2 und die PIN vom Käufer 1a2 validiert. Bei positiver Prüfung erfolgt eine Rückmeldung vom Bezahlservice 1b zur Zahlungsfreigabe an Käufer 1a2 und Verkäufer 1a1, womit der Bezahlvorgang abgeschlossen ist. Für die Verschlüsselung, Identifikation per PIN, Sicherheits-Token und Autorisierung kann ein Text, ein biometrisches Kennzeichen, ein elektronischer Schlüssel oder ein mechanischer Schlüssel, dessen Schlüsselinformationen beispielsweise durch ein Lesegerät in den Rechnersystemen 1a, 1a1, 1a2, 1b eingelesen werden, genutzt werden.

Vorteile dieses Verfahrens bestehen unter anderen darin, dass im kompletten Zahlungsablauf keine zahlungsspezifischen Daten wie Bankleitzahl, Konto-Nr., Kreditkartennummer, PIN etc. an den Verkäufer 1a1 übertragen oder beim Verkäufer 1a1 gespeichert werden. Diese können dementsprechend auch nicht entwendet werden.

Es müssen zudem zwei unabhängige Stellen (Käufer 1a2 und Verkäufer 1a1) beim Bezahlservice 1b registriert und angemeldet sein. Dies verhindert Zahlungsvorgänge an unbekannte Dritte. Der Zahlungsvorgang ist deshalb sowohl für den Käufer 1a2 als auch für den Verkäufer 1a1 sicher. Es besteht für Dritte keine Möglichkeit, den Kommunikationsring unbemerkt zu beeinflussen oder zu missbrauchen.

Die Erfindung stellt damit ein Verfahren zur Adressierung, Authentifizierung und sicheren Datenspeicherung in Rechnersystemen 1, 1a1, 1a2, 1b mit einer Netzwerkschnittstelle 11 und einer Telefonieschnittstelle 12 und einem Speicherplatz 2 für Verwaltungsinformationen zur Verfügung, insbesondere für zugelassene Rufnummern und Teilnehmer-PINs derart, dass die Rechnersysteme 1, 1a1, 1a2, 1b mit einem eine Steuerungslogik 10 abbildenden Programm zur Steuerung des Zusammenwirkens der vorgenannten Schnittstellen 11 programmiert sind und das Verfahren folgende Schritte umfasst: a) Übertragen der Verbindungsinformationen für die Netzwerkschnittstelle 11 eines ersten Rechnersystems 1a über die Telefonieschnittstelle 12 an ein zweites und/oder drittes Rechnersystem 1b; b) Überprüfen einer Rufnummer des ersten Rechnersystems 1a mit den im Speicherplatz 2 im zweiten und/oder dritten Rechnersystem 1b hinterlegten Rufnummern und bei positiver Prüfung Übertragen der Verbindungsinformationen für die Netzwerkschnittstelle 11 des zweiten und/oder dritten Rechnersystems 1b über die Telefonieschnittstelle 12 an das erste Rechnersystem 1a und Aktivierung der Netzwerkschnittstelle 11 des zweiten und/oder dritten Rechnersystems 1b, um Verbindungen 104 auf Basis der Verbindungsinformationen des ersten Rechnersystems 1a anzunehmen; c) Überprüfen der Rufnummer des zweiten und/oder dritten Rechnersystems 1b mit den im Speicherplatz 2 im ersten Rechnersystem 1a hinterlegten Rufnummern und bei positiver Prüfung Aktivierung der Netzwerkschnittstelle 11 des ersten Rechnersystems 1a, um eine Vierte Verbindung 104 auf Basis der Verbindungsinformationen des zweiten und/oder dritten Rechnersystems 1b aufzubauen.

Erfindungsgemäß ist vorgesehen, dass d) die Netzwerkschnittstelle 11 des zweiten und/oder dritten Rechnersystems 1b nur Verbindungen 104 mit den Verbindungsinformationen des ersten Rechnersystems 1a zulässt, und e) die Netzwerkschnittstelle 11 des ersten Rechnersystems 1a nur Verbindungen 104 mit den Verbindungsinformationen des zweiten und/oder dritten Rechnersystems 1b zulässt, und f) die Netzwerkschnittstellen 11 des ersten und zweiten und/oder dritten Rechnersystems 1a, 1b nur für einen kurzen vorgegebenen Zeitraum Verbindungsversuche mit den jeweiligen Verbindungsinformationen zulassen und nach dem Verbindungsaufbau oder nach Ablauf des vorgegebenen Zeitraums ohne Verbindungsaufbau nicht für andere Rechnersysteme erkennbar oder erreichbar sind.

In einer bevorzugten Ausführungsform der Erfindung ist es vorgesehen, dass zwei, d.h. jeweils ein erstes und ein zweites Rechnersysteme 1a1, 1a2 bereits mit einem dritten Rechnersystem 1b verbunden sind und erstes und zweites Rechnersystem 1a1, 1a2 über die Steuerungslogik 10 in dem dritten Rechnersystem 1b eine direkte Verbindung 203 über die Netzwerkschnittstelle 11 aufbauen und das Verfahren folgende weitere Schritte umfasst: g) Übertragen der Verbindungsinformationen für die Telefonieschnittstelle 12 und Netzwerkschnittstelle 11 des ersten Rechnersystems 1a1 mit einer Systemnachricht 201 über die bestehende Verbindung 200 mit dem dritten Rechnersystem 1b an das zweite Rechnersystem 1a2; h) Überprüfen einer Rufnummer des ersten Rechnersystems 1a1 mit im Speicherplatz 2 des zweiten Rechnersystem 1a2 hinterlegten Rufnummern und bei positiver Prüfung übertragen der Verbindungsinformationen 202 für die Telefonieschnittstelle 12 und Netzwerkschnittstelle 11 des zweiten Rechnersystems 1a2 über die bestehende Verbindung 200 mit dem dritten Rechnersystem 1b an das erste Rechnersystem 1a1 und Aktivierung der Netzwerkschnittstelle 11 des zweiten Rechnersystems 1a2, um Verbindungen 203 auf Basis der Verbindungsinformationen des ersten Rechnersystems 1a1 anzunehmen, und i) Überprüfen der Rufnummer des zweiten Rechnersystems 1a2 mit den im Speicherplatz 2 im ersten Rechnersystem 1a1 hinterlegten Rufnummern und bei positiver Prüfung Aktivierung der Netzwerkschnittstelle 11 des ersten Rechnersystems 1a1, um Verbindungen 203 auf Basis der Verbindungsinformationen des zweiten Rechnersystems 1a2 aufzubauen.

Diese Ausführungsform sieht erfindungsgemäß auch vor, dass j) die Netzwerkschnittstelle 11 des zweiten Rechnersystems 1a2 nur Verbindungen 203 mit den Verbindungsinformationen des ersten Rechnersystems 1a1 zulässt; k) die Netzwerkschnittstelle 11 des ersten Rechnersystems 1a1 nur Verbindungen 203 mit den Verbindungsinformationen des zweiten Rechnersystems 1a2 zulässt und I) die Netzwerkschnittstellen 11 des ersten und zweiten Rechnersystems 1a1, 1a2 nur für einen kurzen vorgegebenen Zeitraum, insbesondere für zwischen 1 und 10, bevorzugt für zwischen 2 und 7, insbesondere bevorzugt für zwischen 3 und 5 Sekunden Verbindungsversuche insbesondere zwischen 1 und 15, bevorzugt zwischen 2 und 12, insbesondere bevorzugt zwischen 3 und 10 Verbindungsversuche mit den jeweiligen Verbindungsinformationen zulassen und nach dem Verbindungsaufbau oder nach Ablauf des vorgegebenen Zeitraums ohne Verbindungsaufbau nicht für andere Rechnersysteme erkennbar oder erreichbar sind.

In einer weiteren bevorzugten Ausführungsform der Erfindung ist es vorgesehen, dass im Schritt b) und/oder h) die Netzwerkschnittstelle 11 des zweiten und/oder dritten Rechnersystems 1b, 1a2 aktiviert wird, um Verbindungen auf Basis der Verbindungsinformationen des ersten Rechnersystems 1a , 1a1 aufzubauen und dass im Schritt c) und/oder i) die Netzwerkschnittstelle 11 des ersten Rechnersystems 1a, 1a1 aktiviert wird, um Verbindungen 103 auf Basis der Verbindungsinformationen des zweiten und/oder dritten Rechnersystems 1b, 1a2 anzunehmen.

In einer weiteren bevorzugten Ausführungsform der Erfindung ist es vorgesehen, dass das zweite und/oder dritte Rechnersystem 1b, 1a2 nach Verbindungsaufbau eine Identifizierung vom ersten Rechnersystem 1a, 1a1 anfordert, mit den im Speicherplatz 2 des zweiten und/oder dritten Rechnersystems 1b, 1a2 hinterlegten Identifizierungskennzeichen vergleicht, und bei positiver Prüfung die Verbindung aktiviert bleibt und bei negativer Prüfung die Verbindung geschlossen wird und eine Alarmbenachrichtigung ausgegeben wird.

In einer weiteren bevorzugten Ausführungsform der Erfindung ist es vorgesehen, dass nach einer vorgegebenen Anzahl von negativen Identifizierungsversuchen die Rufnummer des ersten Rechnersystems 1a, 1a1 im Speicherplatz 2 des zweiten und/oder dritten Rechnersystems 1b, 1a2 durch die Steuerungslogik als gesperrt markiert wird und keine Verbindungsinformationen für das erste Rechnersystem 1a, 1a1 mit dieser Rufnummer mehr angenommen werden.

In einer weiteren bevorzugten Ausführungsform der Erfindung ist es vorgesehen, dass das Identifizierungskennzeichen ein Text, ein biometrisches Kennzeichen, ein elektronischer Schlüssel oder ein mechanischer Schlüssel, deren Schlüsselinformationen durch ein Lesegerät im ersten Rechnersystem 1a, 1a1 eingelesen werden, ist.

In einer weiteren bevorzugten Ausführungsform der Erfindung ist es vorgesehen, dass das erste Rechnersystem 1a, 1a1 mit den Verbindungsinformationen ein Sicherheits-Token an das zweite und/oder dritte Rechnersystem 1b, 1a2 mitliefert, das beim Verbindungsaufbau über die Netzwerkschnittstelle 11 übergeben wird und durch die Steuerungslogik 10 im ersten Rechnersystem 1a, 1a1 überprüft wird und bei positiver Prüfung die Verbindung aktiviert bleibt und bei negativer Prüfung die Verbindung geschlossen wird und eine Alarmbenachrichtigung ausgegeben wird.

In einer weiteren bevorzugten Ausführungsform der Erfindung ist es vorgesehen, dass nach einer vorgegebenen Anzahl von negativen Verbindungsversuchen die Rufnummer des zweiten und/oder dritten Rechnersystems 1b, 1a2 im Speicherplatz 2 des ersten Rechnersystems 1a, 1a1 durch die Steuerungslogik 10 als gesperrt markiert wird und keine Verbindungsversuche für das zweite und/oder dritte Rechnersystem 1b, 1a2 mit dieser Rufnummer mehr unternommen werden.

In einer weiteren bevorzugten Ausführungsform der Erfindung ist es vorgesehen, dass zwei Rechnersysteme 1a1, 1a2 die bereits mit einem dritten Rechnersystem 1b verbunden sind und eine direkte Verbindung 203 aufgebaut haben, sich nur über das gemeinsame dritte Rechnersystem 1b gegenseitig authentifizieren und das Verfahren folgende weitere Schritte umfasst: m) das erste Rechnersystem 1a1 fordert vom dritten Rechnersystem 1b ein Sicherheits-Token über die Verbindung 200 an und sendet dieses an das zweite Rechnersystem 1a2 über die direkte Verbindung 203 weiter; n) das zweite Rechnersystem 1a2 leitet das Sicherheits-Token an das dritte Rechnersystem 1b über die Verbindung 200 weiter; o) das dritte Rechnersystem 1b vergleicht die beiden Sicherheits-Token und sendet jeweils eine Systemnachricht mit dem Ergebnis des Vergleiches an erstes und zweites Rechnersystem 1a1, 1a2, und p) die Steuerungslogik 10 dieser Rechnersysteme 1a1, 1a2 überprüft die Systemnachricht mit dem Ergebnis des Vergleiches und lässt bei positiver Prüfung die Verbindung 203 offen und schließt bei negativer Prüfung die direkte Verbindung 203 und gibt eine Alarmmeldung aus.

In einer weiteren bevorzugten Ausführungsform der Erfindung ist es vorgesehen, dass zwei Rechnersysteme einen Bezahlvorgang durchführen und das Verfahren folgende weitere Schritte umfasst: q) die Steuerungslogik 10 im Rechnersystem 1, 1a1 eines Verkäufers erzeugt ein Sicherheits-Token, und ein Rechnersystem 1, 1a2 eines Käufers erhält über die direkte Verbindung 203 vom Rechnersystem 1, 1a1 des Verkäufer das Sicherheits-Token zusammen mit den Zahlungsinformationen; r) das Rechnersystem 1, 1a1 des Verkäufers leitet die Zahlungsinformationen über die Verbindung 200 zusammen mit dem Sicherheits-Token an das Rechnersystem 1b des des Bezahl-Services weiter; s) Rechnersystem 1, 1a2 des Käufers leitet die Zahlungsinformationen zusammen mit dem Sicherheits-Token über die Verbindung 200 an das Rechnersystem 1b des Bezahl-Services weiter, und t) das Rechnersystem 1, 1a2 des Käufers autorisiert den Zahlungsvorgang über die Verbindung 200 beim Rechnersystem 1b des Bezahl-Services mit einer PIN, und u) eine Steuerungslogik 10 im Rechnersystem 1b des Bezahl-Services vergleicht das Sicherheits-Token vom Rechnersystem 1, 1a1 des Verkäufers und Rechnersystem 1, 1a2 des Käufers und validiert die PIN des Rechnersystems 1, 1a2 des Käufers und schließt bei positiver Prüfung den Zahlungsvorgang ab und gibt eine positive Systemnachricht an das Rechnersystem 1, 1a1 des Verkäufers und das Rechnersystem 1, 1a2 des Käufers zurück. Bei negativer Prüfung wird der Zahlungsvorgang abgebrochen und eine negative Systemnachricht an das Rechnersystem 1, 1a1 des Verkäufers und das Rechnersystem 1, 1a2 des Käufers zurückgegeben.

In einer weiteren bevorzugten Ausführungsform der Erfindung ist es vorgesehen, dass für den Bezahlvorgang zwischen Verkäufer und Käufer in einem Geschäft die Verbindung 203 über NFC, Bluetooth, Wireless LAN oder drahtgebundenes LAN, aufgebaut wird.

In einer weiteren bevorzugten Ausführungsform der Erfindung ist es vorgesehen, dass für den Bezahlvorgang die Zahlungsinformationen zwischen Rechnersystem 1, 1a1 des Verkäufers und Rechnersystem 1, 1a2 des Käufers in einem Geschäft oder Online-Shop anstatt über eine direkte Verbindung 203 über ein optisches Signal (z.B. Q/R-Code, Barcode, Zeichenfolgen oder dergleichen), ein akustisches Signal (z.B. Modem-Töne, Sprache, oder dergleichen) oder durch manuelle Eingabe zwischen Verkäufer und Käufer übermittelt werden. Um die Authentifizierung weiter zu verbessern und um die Sicherheit weiter zu erhöhen, kann die Übermittlung kann optional auch bidirektional erfolgen, das heißt, es werden sowohl Daten vom Rechnersystem 1, 1a1 des Verkäufers an das Rechnersystem 1, 1a2 des Käufers als auch vom Rechnersystem 1, 1a2 des Käufers and das Rechnersystem 1, 1a1 des Verkäufers übertragen. Beim Online-Einkauf kann hierbei auch ein zweites Gerät (1a2 - z.B. Smartphone) zur Aufnahme und Übermittlung der Zahlungsinformationen von einem ersten Gerät (1a1 - z.B. PC oder Notebook) genutzt werden. Das erste Gerät (1a1 - z.B. PC oder Notebook) übernimmt in diesem Kontext die Rolle eines Terminals des Verkäufers (1a1).

In einer weiteren bevorzugten Ausführungsform der Erfindung kann die Steuerlogik 10 die Daten für den Zahlungsvorgang zwischen dem Rechnersystem 1, 1a1 des Verkäufers und Rechnersystem 1b des Bezahl-Services bzw. Rechnersystem 1, 1a2 des Käufers und Rechnersystem 1b des Bezahl-Services auch über sonstige Netzwerkverbindungen übertragen, beispielsweise auch solche die nicht wie oben ausgeführt hergestellt wurden. In einer weiteren bevorzugten Ausführungsform der Erfindung ist es vorgesehen, dass für die Verschlüsselung, Identifikation per PIN, Sicherheits-Token und Autorisierung ein Text, ein biometrisches Kennzeichen, ein elektronischer Schlüssel oder ein mechanischer Schlüssel, dessen Schlüsselinformationen durch ein Lesegerät in den Rechnersystemen 1a, 1b, 1a1, 1a2 eingelesen werden, genutzt werden.

In einer weiteren bevorzugten Ausführungsform der Erfindung ist es vorgesehen, dass für geringe Datenmengen, insbesondere für einen Bezahlvorgang, die Steuerlogik 10 wenigstens einen Teil der in den vorhergehenden Schritten erfassten Daten über die Telefonieschnittstelle 12 überträgt.

In einer weiteren bevorzugten Ausführungsform der Erfindung ist es vorgesehen, dass die Steuerungslogik 10 bei Aktivierung eines vorgegebenen Signals Daten, insbesondere Emails, SMS und FAX an Rechnersysteme 1 ohne Zuhilfenahme anderer Internetdienste wie DNS und DynDNS weiterleitet.

In einer weiteren bevorzugten Ausführungsform der Erfindung ist es vorgesehen, dass die Steuerungslogik 10 eine automatische Prüfung durchführt, ob die angezeigte Rufnummer mit dem tatsächlichen Teilnehmer-Anschluss übereinstimmt.

In einer weiteren bevorzugten Ausführungsform der Erfindung ist es vorgesehen, dass Verbindungsanfragen der ersten Rechnersysteme 1a, 1a1 durch die Steuerungslogik 10 in einem zweiten und/oder dritten Rechnersystem 1b, 1a2 an unterschiedliche zweite und/oder dritte Rechnersysteme 1b, 1a2 nach einem vorgegebenen Kriterium, insbesondere einer Anzahl von Verbindungen und/oder einer Auslastung und/oder einer Verfügbarkeit der zweiten und/oder dritten Rechnersysteme 1b, 1a2 und/oder einer Rufnummer und/oder geografischem Aufenthaltsortes verteilt werden.

In einer weiteren bevorzugten Ausführungsform der Erfindung ist es vorgesehen, dass ein erstes Rechnersystem 1a, 1a1 in einer Server-Rolle im Netzwerk Verbindungsanfragen oder Anfragen zur Namensauflösung (z.B. DNS-Anfragen oder dergleichen) von Rechnersystemen im Netzwerk durch die Steuerungslogik 10 verarbeitet und die Steuerungslogik 10 des ersten Rechnersystems 1a, 1a1 den Austausch der Verbindungsinformationen mit einem zweiten und/oder dritten Rechnersystem 1b, 1a2 durchführt und anschließend die Verbindung herstellt oder die Verbindungsparameter (z.B. IP-Adresse, Port-Nummer, oder dergleichen) an die anfragenden Rechnersysteme zurückgibt.

In einer weiteren bevorzugten Ausführungsform der Erfindung ist es vorgesehen, dass die Steuerungslogik 10 eines Rechnersystems 1 die ermittelten Verbindungsparameter auch an ein weiteres Server-System (z.B. Firewall oder dergleichen) weiterleitet und dieses dann die Verbindungen vom Rechnersystem 1 oder von Rechnersystemen aus dem Netzwerk mit diesen Verbindungsparametern zulässt.

In einer weiteren bevorzugten Ausführungsform der Erfindung ist es vorgesehen, dass die Steuerungslogik 10 der zweiten und/oder dritten Rechnersysteme 1b, 1a2 den ersten Rechnersystemen 1a, 1a1 in Abhängigkeit der Verbindungsinformationen automatisch Informationen und Steuerungsdaten weiterleitet oder zur Verfügung stellt.

In einer weiteren bevorzugten Ausführungsform der Erfindung ist es vorgesehen, dass die Rufnummer des zweiten und/oder dritten Rechnersystems 1b für einen anderen oder bestehenden Telefoniedienst, insbesondere einen FAX-Dienst und/oder einen Anrufbeantworter genutzt wird, und die Steuerungslogik 10 des zweiten und/oder dritten Rechnersystems 1b die Rufnummer des ersten Rechnersystems 1a mit den im Speicherplatz 2 des zweiten und/oder dritten Rechnersystems 1b hinterlegten Rufnummern vergleicht und bei Übereinstimmung nicht den Telefoniedienst aktiviert, sondern die Verbindungsdaten für das zweite und/oder dritte Rechnersystem 1b an das erste Rechnersystem 1a übermittelt.

Das vorstehend beschriebene Verfahren soll dabei bevorzugt in Verbindung mit Protokollen anderer verbindungsorientierter Schnittstellen, insbesondere mit NFC, Bluetooth-und WLAN-Protokollen Verwendung finden.

### Bezugsziffernliste

1 Rechnersysteme
1a Erstes Rechnersystem (Client)
1b drittes Rechnersystem (Server)
1a1 Erstes (Client) Rechnersystem
1a2 Zweites (Client) Rechnersystem
2 Speicherplatz
3 Internet
4 Telefonnetz
10 Steuerungslogik
11 Netzwerkschnittstelle
12 Telefonieschnittstelle
101 erste Verbindung
102 zweite Verbindung
103 dritte Verbindung
104 vierte Verbindung
200 Bestehende Verbindung
201 Systemnachricht
202 Verbindungsinformationen
203 Direkte Verbindung

## Patentansprüche

1. Verfahren zur Adressierung, Authentifizierung und sicheren Datenspeicherung in Rechnersystemen umfassend wenigstens ein erstes, wenigstens ein zweites und/oder wenigstens ein drittes Rechnersystem (1a1, 1a2, 1b) mit wenigstens einer Netzwerkschnittstelle (11) und wenigstens einer Telefonieschnittstelle (12) und wenigstens einem Speicherplatz (2) für Verwaltungsinformationen, insbesondere für wenigstens eine zugelassene Rufnummer und/oder wenigstens eine Teilnehmer-PIN derart, dass die Rechnersysteme (1a1, 1a2, 1b) mit einem eine Steuerungslogik abbildenden Programm zur Steuerung des Zusammenwirkens der vorgenannten Schnittstellen programmiert sind, wobei das Verfahren folgende Schritte umfasst:
a) Übertragen der Verbindungsinformationen für die Netzwerkschnittstelle (11) wenigstens eines ersten Rechnersystems (1a1) die Telefonieschnittstelle (12) an wenigstens ein zweites und/oder drittes Rechnersystem (1a2, 1b);
b) Automatisches Überprüfen einer Rufnummer des ersten Rechnersystems (1a1) mit den im Speicherplatz (2) im zweiten oder dritten Rechnersystem (1a2, 1b) hinterlegten Rufnummern und bei positiver Prüfung automatisches übertragen der Verbindungsinformationen für die Netzwerkschnittstelle (11) des zweiten und/oder dritten Rechnersystem (1a2, 1b) über die Telefonieschnittstelle (12) an das erste Rechnersystem (1a1) und Aktivierung der Netzwerkschnittstelle (11) des zweiten und/oder dritten Rechnersystems (1a2, 1b), um Verbindungen (104) auf Basis der Verbindungsinformationen des ersten Rechnersystems (1a1) anzunehmen;
c) Überprüfen der Rufnummer des zweiten und/oder dritten Rechnersystems (1a2, 1b) mit den im Speicherplatz (2) im ersten Rechnersystem (1a1) hinterlegten Rufnummern und bei positiver Prüfung Aktivierung der Netzwerkschnittstelle (11) des ersten Rechnersystems (1a1), um eine Verbindung (101, 102, 103, 104) auf Basis der Verbindungsinformationen des zweiten und/oder dritten Rechnersystems (1a2, 1b) aufzubauen;
d) Zulassen nur von Verbindungen (104) mit den Verbindungsinformationen des ersten Rechnersystems (1a1) durch die Netzwerkschnittstelle (11) des zweiten und/oder dritten Rechnersystems (1a2, 1b), und
e) Zulassen nur von Verbindungen (104) mit den Verbindungsinformationen des zweiten und/oder dritten Rechnersystems (1a2, 1b) durch die Netzwerkschnittstelle (11) des ersten Rechnersystems (1a1), und wobei
f) die Netzwerkschnittstellen (11) des ersten und zweiten und/oder dritten Rechnersystems (1a1, 1a2, 1b) nur für einen kurzen vorgegebenen Zeitraum, insbesondere für zwischen 1 und 10, bevorzugt für zwischen 2 und 7, insbesondere bevorzugt für zwischen 3 und 5 Sekunden Verbindungsversuche mit den jeweiligen Verbindungsinformationen zulassen und nach dem Verbindungsaufbau oder nach Ablauf des vorgegebenen Zeitraums ohne Verbindungsaufbau nicht für andere Rechnersysteme erkennbar oder erreichbar sind.

2. Verfahren nach Anspruch 1, **dadurch gekennzeichnet, dass** wenigstens jeweils das erste und das zweite Rechnersystem (1a1, 1a2) bereits mit dem wenigstens einen dritten Rechnersystem (1b) verbunden sind und erstes und zweites Rechnersystem 1a1, 1a2) jeweils über die Steuerungslogik (10) in dem dritten Rechnersystem (1b) eine direkte Verbindung (203) über die Netzwerkschnittstelle (11) aufbauen und das Verfahren folgende weiteren Schritte umfasst:
g) Übertragen der Verbindungsinformationen für die Telefonieschnittstelle (12) und Netzwerkschnittstelle (11) des ersten Rechnersystems (1a1) mit einer Systemnachricht (201) über die bestehende Verbindung (200) mit dem dritten Rechnersystem (1b) an das zweite Rechnersystem (1a2);
h) Überprüfen einer Rufnummer des ersten Rechnersystems (1a1) mit im Speicherplatz (2) des zweiten Rechnersystem (1a2) hinterlegten Rufnummern und bei positiver Prüfung übertragen der Verbindungsinformationen (202) für die Telefonieschnittstelle (12) und Netzwerkschnittstelle (11) des zweiten Rechnersystems (1a2) über die bestehende Verbindung (200) mit dem dritten Rechnersystem (1b) an das erste Rechnersystem (1a1) und Aktivierung der Netzwerkschnittstelle (11) des zweiten Rechnersystems (1a2), um Verbindungen (203) auf Basis der Verbindungsinformationen des ersten Rechnersystems (1a1) anzunehmen, und
i) Überprüfen der Rufnummer des zweiten Rechnersystems (1a2) mit den im Speicherplatz (2) im ersten Rechnersystem (1a1) hinterlegten Rufnummern und bei positiver Prüfung Aktivierung der Netzwerkschnittstelle (11) des ersten Rechnersystems (1a1), um Verbindungen (203) auf Basis der Verbindungsinformationen des zweiten Rechnersystems (1a2) aufzubauen; wobei
j) die Netzwerkschnittstelle (11) des zweiten Rechnersystems (1a2) nur Verbindungen (203) mit den Verbindungsinformationen des ersten Rechnersystems (1a1) zulässt;
k) die Netzwerkschnittstelle (11) des ersten Rechnersystems (1a1) nur Verbindungen (203) mit den Verbindungsinformationen des zweiten Rechnersystems (1a2) zulässt, und
l) die Netzwerkschnittstellen (11) des ersten und zweiten Rechnersystems 1a1, 1a2) nur für einen kurzen vorgegebenen Zeitraum insbesondere für zwischen 1 und 10, bevorzugt für zwischen 2 und 7, insbesondere bevorzugt für zwischen 3 und 5 Sekunden Verbindungsversuche, insbesondere zwischen 1 und 15, bevorzugt zwischen 2 und 12, insbesondere bevorzugt zwischen 3 und 10 Verbindungsversuche mit den jeweiligen Verbindungsinformationen zulassen und nach dem Verbindungsaufbau oder nach Ablauf des vorgegebenen Zeitraums ohne Verbindungsaufbau nicht für andere Rechnersysteme erkennbar oder erreichbar sind.

3. Verfahren nach einem der Ansprüche 1 oder 2, **dadurch gekennzeichnet, dass** im Schritt b) und/oder h) die Netzwerkschnittstelle (11) des zweiten Rechnersystems (1a2) aktiviert wird, um Verbindungen auf Basis der Verbindungsinformationen des ersten Rechnersystems (1a1) aufzubauen und dass im Schritt c) und/oder i) die Netzwerkschnittstelle (11) des ersten Rechnersystems (1a1) aktiviert wird, um Verbindungen (103) auf Basis der Verbindungsinformationen des zweiten Rechnersystems (1a2) anzunehmen.

4. Verfahren nach einem der vorhergehenden Ansprüche, **dadurch gekennzeichnet, dass** das zweite Rechnersystem (1a2) nach Verbindungsaufbau eine Identifizierung vom ersten Rechnersystem (1a1) anfordert, mit den im Speicherplatz (2) des zweiten Rechnersystems (1a2) hinterlegten Identifizierungskennzeichen vergleicht, und bei positiver Prüfung die Verbindung aktiviert bleibt und bei negativer Prüfung die Verbindung geschlossen wird und eine Alarmbenachrichtigung ausgegeben wird, wobei insbesondere nach einer vorgegebenen Anzahl von negativen Identifizierungsversuchen, bevorzugt nach zwischen 1 und 15, bevorzugt zwischen 2 und 12, insbesondere bevorzugt zwischen 3 und 10 die Rufnummer des ersten Rechnersystems (1a1) im Speicherplatz (2) des zweiten Rechnersystems (1a2) durch die Steuerungslogik (10) als gesperrt markiert wird und keine Verbindungsinformationen für das erste Rechnersystem (1a1) mit dieser Rufnummer mehr angenommen werden oder das Identifizierungskennzeichen ein Text, ein biometrisches Kennzeichen, ein elektronischer Schlüssel oder ein mechanischer Schlüssel, dessen Schlüsselinformationen durch ein Lesegerät an dem ersten, zweiten und/oder dritten Rechnersystem 1a1, 1a2, 1b) eingelesen werden, ist.

5. Verfahren nach einem der vorhergehenden Ansprüche, **dadurch gekennzeichnet, dass** das erste Rechnersystem (1a1) mit den Verbindungsinformationen ein Sicherheits-Token an das zweite Rechnersystem (1a2) mitliefert, das beim Verbindungsaufbau über die Netzwerkschnittstelle (11) übergeben wird und durch die Steuerungslogik (10) im ersten Rechnersystem (1a1) überprüft wird und bei positiver Prüfung die Verbindung aktiviert bleibt und bei negativer Prüfung die Verbindung geschlossen wird und eine Alarmbenachrichtigung ausgegeben wird, wobei insbesondere nach einer vorgegebenen Anzahl von negativen Verbindungsversuchen, bevorzugt nach zwischen 1 und 15, bevorzugt zwischen 2 und 12, insbesondere bevorzugt zwischen 3 und 10 negativen Verbindungsversuchen, die Rufnummer des zweiten Rechnersystems (1a2) im Speicherplatz (2) des ersten Rechnersystems (1a1) durch die Steuerungslogik (10) als gesperrt markiert wird und keine Verbindungsversuche für das zweite Rechnersystem (1a2) mit dieser Rufnummer mehr unternommen werden.

6. Verfahren nach Anspruch 2, **dadurch gekennzeichnet, dass** wenigstens das erste und das zweite Rechnersysteme 1a1, 1a2) die jeweils bereits mit einem gemeinsamen dritten Rechnersystem (1b) verbunden sind und eine direkte Verbindung (203) aufgebaut haben, sich nur über das gemeinsame dritte Rechnersystem (1b) gegenseitig authentifizieren und das Verfahren folgende weitere Schritte umfasst:
m) das erste Rechnersystem (1a1) fordert vom dritten Rechnersystem (1b) ein Sicherheits-Token über die Verbindung (200) an und sendet dieses an das zweite Rechnersystem (1a2) über die direkte Verbindung (203) weiter;
n) das zweite Rechnersystem (1a2) leitet das Sicherheits-Token an das dritte Rechnersystem (1b) über die Verbindung (200) weiter;
o) das dritte Rechnersystem (1b) vergleicht die beiden Sicherheits-Token und sendet jeweils eine Systemnachricht mit dem Ergebnis des Vergleiches an das erste und/oder das zweite Rechnersysteme 1a1, 1a2), und
p) die Steuerungslogik (10) des ersten und/oder des zweiten Rechnersystems 1a1, 1a2) überprüft die Systemnachricht mit dem Ergebnis des Vergleiches und lässt bei positiver Prüfung die Verbindung (203) offen und schließt bei negativer Prüfung die direkte Verbindung (203) und gibt eine Alarmmeldung aus.

7. Verfahren nach Anspruch 2 oder Anspruch 6, **dadurch gekennzeichnet, dass** ein erstes und ein zweites Rechnersystem unter Hinzuziehung eines dritten Rechnersystems (1b) einen Bezahlvorgang durchführen und das Verfahren folgende weitere Schritte umfasst:
q) die Steuerungslogik (10) im ersten Rechnersystem (1a1), insbesondere dem Rechnersystem eines Verkäufers erzeugt ein Sicherheits-Token, und das zweite Rechnersystem (la2), insbesondere das Rechnersystem eines Käufers erhält über die direkte Verbindung (203) von dem ersten Rechnersystem (1a1) insbesondere dem Rechnersystem des Verkäufers das Sicherheits-Token zusammen mit den Zahlungsinformationen;
r) das erste Rechnersystem (1a1), insbesondere das Rechnersystem des Verkäufers leitet die Zahlungsinformationen über die Verbindung (200) zusammen mit dem Sicherheits-Token an das dritte Rechnersystem (1b), insbesondere das Rechnersystem (1b) eines Bezahl- Services (1b) weiter;
s) das zweite Rechnersystem (1a2), insbesondere das Rechnersystem des Käufers leitet die Zahlungsinformationen zusammen mit dem Sicherheits-Token über die Verbindung (200) an das dritte Rechnersystem (1b), insbesondere das Rechnersystem (1b) des Bezahl-Services weiter;
t) das zweite Rechnersystem (1a2), insbesondere das Rechnersystem des Käufers autorisiert den Zahlungsvorgang über die Verbindung (200) beim dritten Rechnersystem (1b), insbesondere dem Rechnersystem (1b) des Bezahl-Services mit einer PIN, und
u) eine Steuerungslogik (10) im dritten Rechnersystem (1b), insbesondere dem Rechnersystem (1b) des Bezahl-Services vergleicht das Sicherheits-Token von erstem Rechnersystem (1a1), insbesondere Rechnersystem des Verkäufers und zweitem Rechnersystem (1a2), insbesondere Rechnersystem des Käufers und validiert die PIN des zweiten Rechnersystems (1a2), insbesondere Rechnersystems des Käufers (1a2) und schließt bei positiver Prüfung den Zahlungsvorgang ab und gibt eine positive Systemnachricht an das erste Rechnersystem (1a2), insbesondere Rechnersystem des Verkäufers und das zweite Rechnersystem (1a2), insbesondere Rechnersystem des Käufers zurück oder bricht bei negativer Prüfung den Zahlungsvorgang ab und gibt eine negative Systemnachricht an das erste Rechnersystem (1a1), insbesondere Rechnersystem des Verkäufers und das zweite Rechnersystem (1a2), insbesondere Rechnersystem des Käufers zurück.

8. Verfahren nach Anspruch 7, **dadurch gekennzeichnet, dass** für den Bezahlvorgang zwischen erstem Rechnersystem (1a1), insbesondere Rechnersystem des Verkäufers und zweitem Rechnersystem (1a2), insbesondere Rechnersystem des Käufers, bevorzugt in einem Geschäft die Verbindung (203) über NFC, Bluetooth, Wireless LAN oder drahtgebundenes LAN, aufgebaut wird und/oder dadurch, dass für den Bezahlvorgang die Zahlungsinformationen zwischen erstem Rechnersystem (1a2), insbesondere Rechnersystem des Verkäufers und zweitem Rechnersystem (1a2), insbesondere Rechnersystem des Käufers, bevorzugt in einem Geschäft oder einem Online-Shop anstatt über eine direkte Verbindung (203) über ein optisches Signal, z.B. Q/R-Code, Barcode, Zeichenfolgen o.dgl., ein akustisches Signal, z.B. Modem-Töne, Sprache, o. dgl., oder durch manuelle Eingabe insbesondere bidirektional übermittelt werden, insbesondere wobei bei einem Online-Einkauf hierbei auch ein das zweite Rechnersystem (1a2) bildendes oder zur Verfügung stellendes zweites Gerät, insbesondere ein Smartphone zur Aufnahme und Übermittlung der Zahlungsinformationen von einem das erste Rechnersystem (1a1) bildenden oder zur Verfügung stellenden ersten Gerät insbesondere einem PC oder Notebook genutzt werden, wobei das erste Gerät bevorzugt als Terminal des ersten Rechnersystems (1a2), insbesondere Rechnersystems des Verkäufers vorgesehen ist.

9. Verfahren nach einem der vorhergehenden Ansprüche, **dadurch gekennzeichnet, dass** die Steuerlogik (10) die Daten für den Zahlungsvorgang zwischen erstem Rechnersystem (1a1), insbesondere Rechnersystem des Verkäufers und drittem Rechnersystem (1b), insbesondere Rechnersystem des Bezahl-Services bzw. zweitem Rechnersystem (1a2), insbesondere Rechnersystem des Käufers und drittem Rechnersystem (1b), insbesondere Rechnersystem des Bezahl-Services über sonstige Netzwerkverbindungen, insbesondere andere Netzwerkverbindungen als in den Ansprüchen 1 oder 2 definiert, übertragen kann und/oder dadurch, dass für die Verschlüsselung, Identifikation per PIN, Sicherheits-Token und Autorisierung ein Text, ein biometrisches Kennzeichen, ein elektronischer Schlüssel oder ein mechanischer Schlüssel genutzt werden, dessen Schlüsselinformationen durch ein Lesegerät in den Rechnersystemen (1a1, 1a2, 1b) eingelesen werden.

10. Verfahren nach einem der vorhergehenden Ansprüche, **dadurch gekennzeichnet, dass** für geringe Datenmengen, insbesondere für einen Bezahlvorgang, die Steuerlogik (10) wenigstens einen Teil der in den vorhergehenden Schritten erfassten Daten über die Telefonieschnittstelle (12) überträgt und/oder dadurch, dass die Steuerungslogik (10) bei Aktivierung eines vorgegebenen Signals Daten, insbesondere Emails, SMS und FAX an Rechnersysteme (1, 1a1, 1a2, 1b) ohne Zuhilfenahme anderer Internetdienste wie insbesondere DNS und DynDNS weiterleitet und/oder dadurch, dass die Steuerungslogik (10) eine automatische Prüfung durchführt, ob die angezeigte Rufnummer mit dem tatsächlichen Teilnehmer-Anschluss übereinstimmt und/oder dadurch, dass Verbindungsanfragen der ersten Rechnersysteme (1a1) durch die Steuerungslogik (10) in einem zweiten und/oder dritten Rechnersystem (1b, 1a2) an unterschiedliche zweite und/oder dritte Rechnersysteme (1b, 1a2) nach einem vorgegebenen Kriterium, insbesondere einer Anzahl von Verbindungen und/oder einer Auslastung und/oder einer Verfügbarkeit der zweiten und/oder dritten Rechnersysteme (1b, 1a2) und/oder einer Rufnummer und/oder eines geografischen Aufenthaltsortes verteilt werden.

11. Verfahren nach einem der vorhergehenden Ansprüche, **dadurch gekennzeichnet, dass** ein erstes Rechnersystem (1a1) in einer Server-Rolle im Netzwerk Verbindungsanfragen oder Anfragen zur Namensauflösung, z.B. DNS-Anfragen, o. dgl., von Rechnersystemen im Netzwerk durch die Steuerungslogik (10) verarbeitet und die Steuerungslogik (10) des ersten Rechnersystems (1a1) den Austausch der Verbindungsinformationen mit einem zweiten und/oder dritten Rechnersystem (1b, 1a2) wie in den vorhergehenden Ansprüchen definiert durchführt und anschließend die Verbindung herstellt oder die Verbindungsparameter, z.B. IP-Adresse, Port-Nummer, o. dgl., an die anfragenden Rechnersysteme zurückgibt.

12. Verfahren nach einem der vorhergehenden Ansprüche, **dadurch gekennzeichnet, dass** die Steuerungslogik (10) wenigstens eines Rechnersystems 1 die wie in den vorhergehenden Ansprüchen definiert ermittelten Verbindungsparameter auch an wenigstens ein weiteres Rechnersystem insbesondere ein Server-System wie z.B. eine Firewall weiterleitet und dieses dann die Verbindungen vom ersten Rechnersystem 1 oder den weiteren Rechnersystemen aus dem Netzwerk mit diesen Verbindungsparametern zulässt und/oder dadurch, dass die Steuerungslogik (10) des zweiten und/oder dritten Rechnersystems (1b, 1a2) wenigstens dem ersten Rechnersystem (1a1) in Abhängigkeit der Verbindungsinformationen automatisch Informationen und Steuerungsdaten weiterleitet oder zur Verfügung stellt.

13. Verfahren nach einem der vorhergehenden Ansprüche, **dadurch gekennzeichnet, dass** die Rufnummer des zweiten und/oder dritten Rechnersystems (1a2, 1b) für einen anderen oder bestehenden Telefoniedienst, insbesondere einen FAX-Dienst und/oder einen Anrufbeantworter genutzt wird, und die Steuerungslogik (10) wenigstens des zweiten und/oder dritten Rechnersystems (1a2, 1b) die Rufnummer wenigstens des ersten Rechnersystems (1a1) mit den im Speicherplatz (2) des zweiten und/oder dritten Rechnersystems (1a2, 1b) hinterlegten Rufnummern vergleicht und bei Übereinstimmung nicht den Telefoniedienst aktiviert, sondern die Verbindungsdaten für das zweite und/oder dritte Rechnersystem (1a2, 1b) an das erste Rechnersystem (1a1) übermittelt.

14. Verfahren nach einem der vorhergehenden Ansprüche, **dadurch gekennzeichnet, dass** für geografisch nahe zusammen liegende Rechnersysteme (1a1, 1a2, 1b), die Verbindungsinformationen für die Netzwerkschnittstelle 11 alternativ über, bevorzugt als Telefonieschnittstelle (12) dienende, optische Signale, z.B. Q/R-Code, Barcode, Zeichenfolgen oder dergleichen, akustische Signale, z.B. Modem-Töne, Sprache oder dergleichen, durch manuelle Eingaben durch zuvor auf anderem Wege hergestellte sichere Verbindungen, z.B. NFC, Bluetooth, WLAN, USB oder dergleichen zwischen den Rechnersystemen (1a1, 1a2, 1b), insbesondere bidirektional, übermittelt werden.

15. Verwendung des Verfahrens nach einem der vorhergehenden Ansprüche mit Protokollen anderer verbindungsorientierten Schnittstellen, insbesondere mit NFC-, Bluetooth- und WLAN-Protokollen.

## Claims

1. A method for addressing, authentication and secure data storage in computer systems comprising at least one first, at least one second and/or at least one third computer system (1a1, 1a2, 1b) with at least one network interface (11) and at least one telephony interface (12) and at least one storage space (2) for administrative information, in particular for at least one authorized call number and/or at least one subscriber PIN in such a way that the computer systems (1a1, 1a2, 1b) are programmed with a program reproducing a control logic for controlling the interaction of the aforementioned interfaces, wherein the method comprises the following steps:
a) transmitting the connection information for the network interface (11) of at least one first computer system (1a1) via the telephony interface (12) to at least one second and/or third computer system (1a2, 1b);
b) automatically checking a call number of the first computer system (1a1) with the call numbers stored in the storage space (2) in the second or third computer system (1a2, 1b) and, if the outcome of the check is positive, automatically transmitting the connection information for the network interface (11) of the second and/or third computer system (1a2, 1b) via the telephony interface (12) to the first computer system (1a1) and activating the network interface (11) of the second and/or third computer system (1a2, 1b), in order to accept connections (104) on the basis of the connection information of the first computer system (1a1);
c) checking the call number of the second and/or third computer system (1a2, 1b) with the call numbers stored in the storage space (2) in the first computer system (1a1) and, if the outcome of the check is positive, activating the network interface (11) of the first computer system (1a1), in order to establish a connection (101, 102, 103, 104) on the basis of the connection information of the second and/or third computer system (1a2, 1b);
d) only allowing connections (104) with the connection information of the first computer system (1a1) by the network interface (11) of the second and/or third computer system (1a2, 1b), and
e) only allowing connections (104) with the connection information of the second and/or third computer system (1a2, 1b) by the network interface (11) of the first computer system (1a1), and wherein
f) the network interfaces (11) of the first and second and/or third computer system (1a1, 1a2, 1b) only allow connection attempts, in particular for between 1 and 10, preferably between 2 and 7, in particular preferably between 3 and 5 seconds, with the respective connection information, and after the connection is established or after the predetermined time period has elapsed without a connection being established these network interfaces are not recognizable or reachable for other computer systems.

2. The method according to claim 1, **characterized in that** at least in each case the first and the second computer system (1a1, 1a2) are already connected to the at least one third computer system (1b), and the first and second computer system (1a1, 1a2) in each case by means of the control logic (10) in the third computer system (1b) establish a direct connection (203) via the network interface (11), and the method comprises the following further steps:
g) transmitting to the second computer system (1a2) the connection information for the telephony interface (12) and network interface (11) of the first computer system (1a1) with a system message (201) via the existing connection (200) to the third computer system (1b);
h) checking a call number of the first computer system (1a1) with call numbers stored in the storage space (2) of the second computer system (1a2) and, if the outcome of the check is positive, transmitting to the first computer system (1a1) the connection information (202) for the telephony interface (12) and network interface (11) of the second computer system (1a2) via the existing connection (200) to the third computer system (1b), and activating the network interface (11) of the second computer system (1a2), in order to accept connections (203) on the basis of the connection information of the first computer system (1a1); and
i) checking the call number of the second computer system (1a2) with the call numbers stored in the storage space (2) in the first computer system (1a1) and, if the outcome of the check is positive, activating the network interface (11) of the first computer system (1a1), in order to establish connections (203) on the basis of the connection information of the second computer system (1a2); wherein
j) the network interface (11) of the second computer system (1a2) only allows connections (203) with the connection information of the first computer system (1a1);
k) the network interface (11) of the first computer system (1a1) only allows connections (203) with the connection information of the second computer system (1a2), and
I) the network interfaces (11) of the first and second computer system (1a1, 1a2) only allow connection attempts, in particular between 1 and 15, preferably between 2 and 12, in particular preferably between 3 and 10 connection attempts with the respective connection information for a short predetermined time period, in particular for between 1 and 10, preferably between 2 and 7, in particular preferably between 3 and 5 seconds, and after the connection is established or after the predetermined time period has elapsed without a connection being established these network interfaces are not recognizable or reachable for other computer systems.

3. The method according to one of claims 1 or 2, **characterized in that** in step b) and/or h) the network interface (11) of the second computer system (1a2) is activated in order to establish connections on the basis of the connection information of the first computer system (1a1), and that in step c) and/or i) the network interface (11) of the first computer system (1a1) is activated in order to accept connections (103) on the basis of the connection information of the second computer system (1a2).

4. The method according to one of the preceding claims, **characterized in that** after a connection is established the second computer system (1a2) requests an identification of the first computer system (1a1), compares it with the identification tag stored in the storage space (2) of the second computer system (1a2), and if the outcome of the check is positive the connection remains activated and if the outcome of the check is negative the connection is closed and in particular an alarm notification is output, wherein in particular after a predetermined number, preferably after between 1 and 15, more preferably between 2 and 12, in particular preferably between 3 and 10 negative identification attempts, the call number of the first computer system (1a1) in the storage space (2) of the second computer system (1a2) is marked as blocked by the control logic and no more connection information is accepted for the first computer system (1a1) with this call number or wherein the identification tag is a text, a biometric tag, an electronic key or a mechanical key, of which the key information is read by a reading device on the first, second and/or third computer system (1a1, 1a2, 1b).

5. The method according to one of the according to one of the preceding claims, **characterized in that** the first computer system (1a1) supplies a security token with the connection information to the second and/or third computer system (1a2), and this security token is transmitted when the connection is established via the network interface (11) and is checked by the control logic (10) in the first computer system (1a1), and if the outcome of the check is positive the connection remains activated and if the outcome of the check is negative the connection is closed and an alarm notification is output, wherein in particular after a predetermined number, in particular after between 1 and 15, preferably between 2 and 12, in particular preferably between 3 and 10 negative connection attempts, the call number of the second computer system (1a2) in the storage space (2) of the first computer system (1a1) is marked as blocked by the control logic (10) and no more connection attempts are accepted for the second computer system (1a2) with this call number.

6. The method according to claim 2, **characterized in that** at least the first and the second computer systems (1a1, 1a2), which in each case are already connected to a common third computer system (1b) and have established a direct connection (203), are only authenticated reciprocally via the common third computer system (1b), and the method comprises the following further steps:
m) the first computer system (1a1) requests a security token from the third computer system (1b) via the connection (200) and sends this on to the second computer system (1a2) via the direct connection (203);
n) the second computer system (1a2) passes on the security token to the third computer system (1b) via the connection (200);
o) the third computer system (1b) compares the two security tokens and in each case sends a system message with the result of the comparison to the first and/or the second computer systems (1a1, 1a2), and
p) the control logic (10) of the first and/or the second computer system (1a1, 1a2) checks the system message with the result of the comparison and when the outcome of the check is positive it leaves the connection (203) open and when the outcome of the check is negative it closes the direct connection (203) and outputs an alarm message.

7. The method according to claim 2 or claim 6, **characterized in that** a first and a second computer system with the addition of a third computer system (1b) carry out a payment process, and the method comprises the following further steps:
q) the control logic (10) in the first computer system (1a1), in particular the computer system of a vendor, generates a security token, and the second computer system (1a2), in particular the computer system of a purchaser, obtains the security token together with the payment information from the first computer system (1a1), in particular the purchaser's computer system, via the direct connection (203);
r) the first computer system (1a1), in particular the vendor's computer system, passes on the payment information via the connection (200) together with the security token to the third computer system (1b), in particular the computer system (1b) of a payment service (1b);
s) the second computer system (1a2), in particular the purchaser's computer system, passes on the payment information via the connection (200) together with the security token to the third computer system (1b), in particular the computer system (1b) of the payment service;
t) the second computer system (1a2), in particular the purchaser's computer system, authorizes the payment process via the connection (200) in the third computer system (1b), in particular the computer system (1b) of the payment service, with a PIN, and
u) a control logic (10) in the third computer system (1b), in particular the computer system (1b) of the payment service, compares the security token from the first computer system (1a1), in particular the vendor's computer system, and the second computer system (1a2), in particular the purchaser's computer system, and validates the PIN of the second computer system (1a2), in particular the purchaser's computer system (1a2), and concludes the payment process and sends back a positive system message to the first computer system (1a2), in particular the vendor's computer system, and to the second computer system (1a2), in particular the purchaser's computer system, when the outcome of the check is positive, and sends back a negative system message to the first computer system (1a1), in particular the vendor's computer system, and the second computer system (1a2), in particular the purchaser's computer system, when the outcome of the check is negative.

8. The method according to claim 7, **characterized in that** for the payment process between the first computer system (1a1), in particular the vendor's computer system, and the second computer system (1a2), in particular the purchaser's computer system, preferably in a shop the connection (203) is established via NFC, Bluetooth, wireless LAN or wired LAN and/or **in that** for the payment process between the first computer system (1a2), in particular the vendor's computer system, and the second computer system (1a2), in particular the purchaser's computer system, preferably in a shop or an online shop, the payment information is not transmitted via a direct connection (203) but via an optical signal for example Q/R code, barcode, character strings or the like, an acoustic signal for example modem tones, speech, or the like or by manual input, in particular bidirectionally, in particular wherein in this case, for an online purchase, a second device which forms or provides the second computer system (1a2) is used, in particular a smartphone for receiving and transmitting the payment information from a first device which forms or provides the first computer system (1a1), in particular a PC or notebook, wherein the first device is preferably provided as a terminal of the first computer system (1a2), in particular the vendor's computer system.

9. The method according to one of the preceding claims, **characterized in that** the control logic (10) can transmit the data for the payment process between the first computer system (1a1), in particular the vendor's computer system, and the third computer system (1b), in particular the computer system of the payment service, or the second computer system (1a2), in particular the purchaser's computer system, and the third computer system (1b), in particular the computer system of the payment service, via other network connections, in particular different network connections from those defined in claims 1 or 2 and/or **in that** a text, a biometric tag, an electronic key or a mechanical key, of which the key information is read for example by a reading device in the computer systems (1a1, 1a2, 1b), are used for the encryption, identification by PIN, security token and authorization.

10. The method according to one of the preceding claims, **characterized in that** for small quantities of data, in particular for a payment process, the control logic (10) transmits at least a part of the data captured in the preceding steps via the telephony interface (12) and/or **in that** upon activation of a predetermined signal the control logic (10) passes on data, in particular email, SMS and fax to computer systems (1, 1a1, 1a2, 1b) without the aid of other internet services such as in particular DNS and DynDNS and/or **in that** the control logic (10) carries out an automatic check as to whether the displayed call number corresponds to the actual subscriber connection and/or **in that** connection requests from the first computer systems (1a1) are distributed by the control logic (10) in a second and/or third computer system (1b, 1a2) to different second and/or third computer systems (1b, 1a2) according to a predetermined criterion, in particular to a number of connections and/or a utilization and/or an availability of the second and/or third computer systems (1b, 1a2) and/or a call number and/or a geographical location.

11. The method according to one of the preceding claims, **characterized in that** a first computer system (1a1) in a server role in the network processes connection requests or requests for name resolution for example DNS requests or the like from computer systems in the network through the control logic (10), and the control logic (10) of the first computer system (1a1) carries out the exchange of the connection information with a second and/or third computer system (1b, 1a2) as defined in the preceding claims and then produces the connection or sends back the connection parameters for example IP address, port number, or the like to the requesting computer systems.

12. The method according to one of the preceding claims, **characterized in that** the control logic (10) of at least one computer system (1) also passes on the determined connection parameters, as defined in the preceding claims, to at least one further computer system, in particular a server system such as for example a firewall, and this then allows the connections of the first computer system (1) or the further computer systems from the network with these connection parameters and/or **in that** the control logic (10) of the second and/or third computer system (1b, 1a2) automatically passes on or makes available information and control data to the first computer system (1a1) as a function of the connection information.

13. The method according to one of the preceding claims, **characterized in that** the call number of the second and/or third computer system (1b) is used for another or an existing telephony service, in particular a fax service and/or an answering machine, and the control logic (10) of at least the second and/or third computer system (1a2, 1b) compares the call number of at least the first computer system (1a) with the call numbers stored in the storage space (2) of the second and/or third computer system (1a2, 1b) and in the event of conformity it does not activate the telephony service, but transmits the connection data for the second and/or third computer system (1a2, 1b) to the first computer system (1a1).

14. The method according to one of the preceding claims, **characterized in that** for computer systems (1a1, 1a2, 1b) which lie geographically close together the connection information for the network interface (11) can then be transmitted alternatively, in particular bidirectionally, by means of signals, preferably replacing the telephony interface (12), for example Q/R code, barcode, character strings or the like, acoustic signals for example modem tones, speech, or the like, by manual inputs and/or by secure connections previously produced in another way for example NFC, Bluetooth, WLAN, USB, or the like between the computer systems (1a1, 1a2, 1b).

15. Use of the method according to one of the preceding claims with protocols of other connection-orientated interfaces, in particular with NFC, Bluetooth and WLAN protocols

## Revendications

1. Procédé d'adressage, d'authentification et de stockage sécurisé de données dans des systèmes informatiques comprenant au moins un premier, au moins un deuxième et/ou au moins un troisième système informatique (1a1, 1a2, 1b) avec au moins une interface réseau (11) et au moins une interface téléphonique (12) et au moins un espace de stockage (2) pour informations administratives, en particulier pour au moins un numéro d'appel autorisé et/ou au moins un code PIN d'abonné, de telle sorte que les systèmes informatiques (1a1, 1a2, 1b) sont programmés avec un programme reproduisant une logique de commande pour commander l'interaction des interfaces précitées, le procédé comprenant les étapes suivantes :
a) la transmission des informations de connexion pour l'interface réseau (11) d'au moins un premier système informatique (1a1) via l'interface téléphonique (12) à au moins un deuxième et/ou troisième système informatique (1a2, 1b);
b) vérifier automatiquement un numéro d'appel du premier système informatique (1a1) avec les numéros d'appel stockés dans l'espace de stockage (2) du deuxième ou du troisième système informatique (1a2, 1b) et, si le résultat du contrôle est positif, transmettre automatiquement les informations de connexion pour l'interface réseau (11) du deuxième et/ou troisième système informatique (1a2, 1b) via l'interface téléphonique (12) vers le premier système informatique (1a1) et l'activation de l'interface réseau (11) du deuxième et/ou du troisième système informatique (1a2, 1b), pour accepter des connexions (104) sur la base des informations de connexion du premier système informatique (1a1);
c) vérifier le numéro d'appel du deuxième et/ou du troisième système informatique (1a2, 1b) avec les numéros d'appel stockés dans l'espace de stockage (2) du premier système informatique (1a1) et, si le résultat du contrôle est positif, activer l'interface réseau (11) du premier système informatique (1a1), pour établir une connexion (101, 102, 103, 104) à partir des informations de connexion du deuxième et/ou troisième système informatique (1a2, 1b) ;
d) autoriser uniquement les connexions (104) avec les informations de connexion du premier système informatique (1a1) par l'interface réseau (11) du deuxième et/ou du troisième système informatique (1a2, 1b), et
e) autoriser uniquement des connexions (104) avec les informations de connexion du deuxième et/ou du troisième système informatique (1a2, 1b) par l'interface réseau (11) du premier système informatique (1a1), et où
f) les interfaces réseau (11) des premier et deuxième et/ou troisième systèmes informatiques (1a1, 1a2, 1b) ne permettent que des tentatives de connexion, en particulier entre 1 et 10, de préférence entre 2 et 7, en particulier entre 3 et 5 secondes, avec les informations de connexion respectives, et après que la connexion a été établie ou après que la période de temps prédéterminée se soit écoulée sans connexion établie, ces interfaces réseau ne sont ni identifiables ni accessibles aux autres systèmes informatiques.

2. Procédé selon la revendication 1, **caractérisé en ce qu'**au moins le premier et le deuxième système informatique (1a1, 1a2) sont déjà reliés au moins au troisième système informatique (1b) et le premier et le deuxième système informatique (1a1, 1a2) établissent chacun une liaison directe (203) via l'interface réseau (11) au moyen de la logique de commande (10) du troisième système informatique (1b) et le procédé comporte les étapes suivantes:
g) transmettre au deuxième système informatique (1a2) les informations de connexion pour l'interface téléphonique (12) et l'interface réseau (11) du premier système informatique (1a1) avec un message système (201) via la connexion existante (200) au troisième système informatique (1b) ;
h) vérifier un numéro d'appel du premier système informatique (1a1) avec des numéros d'appel stockés dans l'espace de stockage (2) du deuxième système informatique (1a2) et, si le résultat du contrôle est positif, transmettre au premier système informatique (1a1) les informations de connexion (202) pour l'interface téléphonique (12) et l'interface réseau (11) du deuxième système informatique (1a2) via la connexion existante (200) au troisième système informatique (1b), et l'activation de l'interface réseau (11) du deuxième système informatique (1a2), pour accepter des connexions (203) sur la base des informations de connexion du premier système informatique (1a1) ; et
i) vérifier le numéro d'appel du deuxième système informatique (1a2) avec les numéros d'appel stockés dans l'espace de stockage (2) du premier système informatique (1a1) et, si le résultat du contrôle est positif, activer l'interface réseau (11) du premier système informatique (1a1), pour établir des connexions (203) sur la base des informations de connexion du deuxième système informatique (1a2) ; où
j) l'interface réseau (11) du deuxième système informatique (1a2) permet uniquement des connexions (203) avec les informations de connexion du premier système informatique (1a1) ;
k) l'interface réseau (11) du premier système informatique (1a1) permet uniquement des connexions (203) avec les informations de connexion du second système informatique (1a2), et
I) les interfaces réseau (11) du premier et du deuxième système informatique (1a1, 1a2) ne permettent que des tentatives de connexion, en particulier entre 1 et 15, de préférence entre 2 et 12, en particulier entre 3 et 10 tentatives de connexion avec les informations de connexion respectives pendant une courte durée prédéterminée, en particulier entre 1 et 10, de préférence entre 2 et 7, en particulier entre 3 et 5 secondes, et après l'établissement ou l'expiration de la durée prédéterminée sans établissement de connexion ces interfaces réseau ne sont plus identifiables ou accessibles pour les autres systèmes informatiques.

3. Procédé selon l'une des revendications 1 ou 2, **caractérisé en ce que** dans l'étape b) et/ou h) l'interface réseau (11) du deuxième système informatique (1a2) est activée pour établir des connexions sur la base des informations de connexion du premier système informatique (1a1), et que dans l'étape c) et/ou i) l'interface réseau (11) du premier système informatique (1a1) est activée pour accepter les connexions (103) sur la base des informations de connexion du deuxième système informatique (1a2).

4. Procédé selon l'une des revendications précédentes, **caractérisé en ce qu'**après l'établissement d'une connexion, le deuxième système informatique (1a2) demande une identification du premier système informatique (1a1), la compare avec l'étiquette d'identification stockée dans l'espace de stockage (2) du deuxième système informatique (1a2) et si le résultat du contrôle est positif, la connexion reste active et si le résultat du contrôle est négatif la connexion est fermée et notamment une alarme est envoyée, notamment après un nombre prédéterminé, de préférence après entre 1 et 15, de préférence entre 2 et 12, en particulier de préférence entre 3 et 10 tentatives d'identification négative, le numéro d'appel du premier système informatique (1a1) dans l'espace de mémoire (2) du deuxième système informatique (1a2) est marqué comme bloqué par la logique de commande et aucune autre information de connexion n'est acceptée pour le premier système informatique (1a1) avec ce numéro d'appel ou dans lequel l'étiquette d'identification est un texte, une étiquette biométrique, une clé électronique ou une clé mécanique dont l'information clé est lue par un lecteur sur le premier, deuxième et/ou troisième système informatique (1a1, 1a2, 1b).

5. Procédé selon l'une des revendications précédentes, **caractérisé en ce que** le premier système informatique (1a1) fournit un jeton de sécurité avec les informations de connexion au deuxième et/ou au troisième système informatique (1a2), et ce jeton de sécurité est transmis lorsque la connexion est établie via l'interface réseau (11) et est vérifié par la logique de commande (10) du premier système informatique (1a1), et si le résultat du contrôle est positif la connexion reste active et si le résultat du contrôle est négatif la connexion est fermée et une alarme est émise, le numéro d'appel du deuxième système informatique (1a2) dans l'espace de mémoire (2) du premier système informatique (1a1) est marqué comme étant bloqué par la logique de commande (10) après un nombre prédéterminé, en particulier après entre 1 et 15, de préférence entre 2 et 12, de préférence entre 3 et 10 tentatives de connexion négatives, en particulier entre 3 et 10, le deuxième système informatique (1a2) étant marqué par la logique de commande (10) et aucune autre tentative de connexion ne sera acceptée pour le deuxième système informatique (1a2) par ce numéro d'appel.

6. Procédé selon la revendication 2, **caractérisé en ce qu'**au moins les premier et deuxième systèmes informatiques (1a1, 1a2), qui sont déjà connectés chacun à un troisième système informatique commun (1b) et ont établi une connexion directe (203), ne sont authentifiés réciproquement que par le troisième système informatique commun (1b), et le procédé comprend les autres étapes suivantes :
m) le premier système informatique (1a1) demande un jeton de sécurité du troisième système informatique (1b) via la connexion (200) et l'envoie au deuxième système informatique (1a2) via la connexion directe (203) ;
n) le deuxième système informatique (1a2) transmet le jeton de sécurité au troisième système informatique (1b) via la connexion (200) ;
o) le troisième système informatique (1b) compare les deux jetons de sécurité et envoie dans chaque cas un message système avec le résultat de la comparaison au premier et/ou au deuxième système informatique (1a1, 1a2), et
p) la logique de commande (10) du premier et/ou du deuxième système informatique (1a1, 1a2) vérifie le message système avec le résultat de la comparaison et lorsque le résultat de la vérification est positif, elle laisse la connexion (203) ouverte et lorsque le résultat de la vérification est négatif, elle ferme la connexion directe (203) et émet un message d'alarme.

7. Procédé selon la revendication 2 ou la revendication 6, **caractérisé en ce qu'**un premier et un second système informatique avec l'addition d'un troisième système informatique (1b) effectuent un processus de paiement, et le procédé comprend les étapes supplémentaires suivantes :
q) la logique de commande (10) dans le premier système informatique (1a1), en particulier le système informatique d'un vendeur, génère un jeton de sécurité, et le second système informatique (1a2), en particulier le système informatique d'un acheteur, obtient le jeton de sécurité avec les informations de paiement du premier système informatique (1a1), en particulier le système informatique de l'acheteur, via la connexion directe (203) ;
r) le premier système informatique (1a1), en particulier le système informatique du vendeur, transmet les informations de paiement via la connexion (200) avec le jeton de sécurité au troisième système informatique (1b), en particulier le système informatique (1b) d'un service de paiement (1b) ;
s) le deuxième système informatique (1a2), en particulier le système informatique de l'acheteur, transmet les informations de paiement via la connexion (200) avec le jeton de sécurité au troisième système informatique (1b), en particulier le système informatique (1b) du service de paiement ;
t) le deuxième système informatique (1a2), en particulier le système informatique de l'acheteur, autorise le processus de paiement via la connexion (200) dans le troisième système informatique (1b), en particulier le système informatique (1b) du service de paiement, avec un PIN, et
u) une logique de commande (10) dans le troisième système informatique (1b), en particulier le système informatique (1b) du service de paiement, compare le jeton de sécurité du premier système informatique (1a1), en particulier le système informatique du vendeur, et du deuxième système informatique (1a2), en particulier le système informatique de l'acheteur, et valide le PIN du deuxième système informatique (1a2), en particulier celui de l'acheteur (1a2), et conclut le processus de paiement et renvoie un message système positif au premier système informatique (1a2), en particulier au système informatique du vendeur, et au second système informatique (1a2), en particulier au système informatique de l'acheteur, lorsque le résultat du contrôle est positif, et renvoie un message système négatif au premier système informatique (1a1), en particulier au système informatique du vendeur, et au second système informatique (1a2), en particulier au système informatique de l'acheteur, lorsque le contrôle est négatif.

8. Procédé selon la revendication 7, **caractérisé en ce que** pour le processus de paiement entre le premier système informatique (1a1), en particulier le système informatique du vendeur, et le second système informatique (1a2), en particulier le système informatique de l'acheteur, de préférence dans un magasin, la connexion (203) est établie via NFC, Bluetooth, LAN sans fil ou LAN filaire et/ou **en ce que** pour le processus de paiement entre le premier système informatique (1a2), en particulier le système informatique du vendeur, et le second système informatique (1a2), en particulier le système informatique de l'acheteur, de préférence dans un magasin ou une boutique en ligne, les informations de paiement ne sont pas transmises par une connexion directe (203) mais par un signal optique par exemple le code Q/R, code à barres, chaînes de caractères ou similaires, un signal acoustique, par exemple des tonalités de modem, de la parole ou similaire, ou par entrée manuelle, en particulier bidirectionnelle, en particulier dans ce cas, pour un achat en ligne, un second dispositif qui forme ou fournit le second système informatique (1a2) est utilisé, en particulier un smartphone pour recevoir et transmettre les informations de paiement à partir d'un premier dispositif qui forme ou fournit le premier système informatique (1a1), en particulier un PC ou un ordinateur portable, le premier dispositif étant de préférence prévu comme terminal du premier système informatique (1a2), en particulier le système informatique du vendeur.

9. Procédé selon l'une des revendications précédentes, **caractérisé en ce que** la logique de commande (10) peut transmettre les données pour le processus de paiement entre le premier système informatique (1a1), en particulier le système informatique du vendeur, et le troisième système informatique (1b), en particulier le système informatique du service de paiement, ou le deuxième système informatique (1a2), en particulier le système informatique du client et le troisième système informatique (1b), en particulier le système informatique du service de paiement, par l'intermédiaire d'autres connexions réseau, en particulier des connexions réseau différentes de celles définies dans les revendications 1 ou 2 et/ou **en ce qu'**un texte, une étiquette biométrique, une clé électronique ou une clé mécanique, dont les informations clés sont lues par exemple par un dispositif de lecture dans les systèmes informatiques (1a1, 1a2, 1b), sont utilisés pour le chiffrement, l'identification par PIN, jeton de sûreté et autorisation.

10. Procédé selon l'une des revendications précédentes, **caractérisé en ce que** pour de petites quantités de données, en particulier pour un processus de paiement, la logique de commande (10) transmet au moins une partie des données saisies dans les étapes précédentes via l'interface téléphonique (12) et/ou **en ce que** la logique de commande (10) transmet des données, en particulier des e-mails, SMS et fax aux systèmes informatiques (1, 1a1, 1a2, 1b) sans l'aide d'autres services Internet tels que notamment DNS et DynDNS et/ou **en ce que** la logique de commande (10) vérifie automatiquement si le numéro d'appel affiché correspond à la connexion réelle de l'abonné et/ou **en ce que** les demandes de connexion des premiers systèmes informatiques (1a1) sont réparties par la logique de commande (10) dans un deuxième et/ou troisième système informatique (1b, 1a2) à différents deuxième et/ou troisième systèmes informatiques (1b, 1a2) selon un critère prédéterminé, en particulier à un certain nombre de connexions et/ou une utilisation et/ou une disponibilité des deuxième et/ou troisième systèmes informatiques (1b, 1a2) et/ou un numéro d'appel et/ou une situation géographique.

11. Procédé selon l'une des revendications précédentes, **caractérisé en ce qu'**un premier système informatique (1a1) dans un rôle de serveur dans le réseau traite des demandes de connexion ou des demandes de résolution de noms par exemple des demandes DNS ou similaires provenant de systèmes informatiques dans le réseau par la logique de commande (10), et la logique de commande (10) du premier système informatique (1a1) effectue l'échange des informations de connexion avec un deuxième et/ou troisième système informatique (1b, 1a2) comme défini dans les revendications précédentes et produit ensuite la connexion ou renvoie les paramètres de connexion par exemple adresse IP, numéro de port ou similaire aux systèmes informatiques demandeurs.

12. Procédé selon l'une des revendications précédentes, **caractérisé en ce que** la logique de commande (10) d'au moins un système informatique (1) transmet également les paramètres de connexion déterminés, tels que définis dans les revendications précédentes, à au moins un autre système informatique, en particulier un système serveur comme par exemple un pare-feu, et cela permet ensuite de connecter le premier système informatique (1) ou les autres systèmes informatiques du réseau avec ces paramètres de connexion et/ou **en ce que** la logique de commande (10) du deuxième et/ou du troisième système informatique (1b, 1a2) transmet automatiquement ou met à disposition des informations et des données de commande au premier système informatique (1a1) en fonction des informations de connexion.

13. Procédé selon l'une des revendications précédentes, **caractérisé en ce que** le numéro d'appel du deuxième et/ou du troisième système informatique (1b) est utilisé pour un autre service ou un service téléphonique existant, en particulier un service de fax et/ou un répondeur, et la logique de commande (10) d'au moins le deuxième et/ou le troisième système informatique (1a2, 1b) compare le numéro d'appel d'au moins le premier système informatique (1a) avec les numéros d'appel stockés dans l'espace de stockage (2) du deuxième et/ou du troisième système informatique (1a2, 1b) et, en cas de conformité, n'active pas le service téléphonique, mais transmet les données de connexion du deuxième et/ou troisième système informatique (1a2, 1b) au premier système informatique (1a1).

14. Procédé selon l'une des revendications précédentes, **caractérisé en ce que**, pour des systèmes informatiques (1a1, 1a2, 1b) géographiquement proches l'un de l'autre, les informations de connexion pour l'interface réseau (11) peuvent ensuite être transmises alternativement, en particulier bidirectionnellement, au moyen de signaux, remplaçant de préférence l'interface téléphonique (12), par exemple code Q/R, code à barres, chaînes de caractères ou similaires, signaux acoustiques par exemple tonalités de modem, parole ou similaires, par des entrées manuelles et/ou par des connexions sécurisées produites précédemment d'une autre manière par exemple NFC, Bluetooth, WLAN, USB, ou similaire entre les systèmes informatiques (1a1, 1a2, 1b).

15. Utilisation du procédé selon l'une des revendications précédentes avec des protocoles d'autres interfaces orientées connexion, en particulier avec les protocoles NFC, Bluetooth et WLAN
